# FASCICULE DE BREVET EUROPEEN

(11) **EP 4 399 860 B1**
(45) Date de publication et mention de la délivrance du brevet: **08.04.2026**
(21) Numéro de dépôt: 22773764.0
(22) Date de dépôt: 01.09.2022
(51) Int. Cl.: H04L 67/562, H04W 28/16

(54) **PROCEDE ET DISPOSITIF DE SUBSTITUTION D'UNE PLURALITE DE FOURNISSEURS DE SERVICES PAR UN FOURNISSEUR DE SERVICES**
VERFAHREN UND VORRICHTUNG ZUM ERSETZEN EINER VIELZAHL VON DIENSTANBIETERN MIT EINEM DIENSTANBIETER
METHOD AND DEVICE FOR SUBSTITUTING A PLURALITY OF SERVICE PROVIDERS WITH ONE SERVICE PROVIDER

(30) Priorité: 06.09.2021 FR 2109297
(43) Date de publication de la demande: 17.07.2024
(73) Titulaire: Orange, 92130 Issy-les-Moulineaux (FR)
(72) Inventeur: MARJOU, Xavier, 92326 CHÂTILLON CEDEX (FR); RADIER, Benoit, 92326 CHÂTILLON CEDEX (FR); LE GLEAU, Tangui, 92326 CHÂTILLON CEDEX (FR)
(86) Numéro de dépôt international: PCT/FR2022/051647
(87) Numéro de publication internationale: WO 2023/031560

(56) Documents cités:
- WO-A1-2020/239704

## Description

### 1. Domaine technique

L'invention est relative à la réduction de la consommation d'énergie nécessaire à l'acheminement de données de communications pour un ensemble de clients en tirant parti d'une collaboration entre des fournisseurs de services distincts. Le procédé permet ainsi de satisfaire le besoin d'accès aux services des clients respectifs des fournisseurs de services collaborant tout en réduisant le coût énergétique associé à la fourniture du service d'accès.

### 2. Etat de la technique

La consommation énergétique des infrastructures de communications représente un intérêt grandissant pour les fournisseurs de services en charges de ces infrastructures non seulement pour réduire le coût associé aux ressources énergétiques à consacrer à l'activation des infrastructures et à l'acheminement des données des clients mais également pour faire diminuer les ressources nécessaires pour satisfaire les clients et ainsi préserver notre écosystème. Les fournisseurs de services se voient en outre contraints par les législateurs respectifs des pays dans lesquels les fournisseurs de services déploient et administrent des réseaux de communication des objectifs de réduction de consommations énergétiques conformément à un calendrier établi, contribuant ainsi à un objectif plus global des pays à réduire leurs consommations énergétiques. Dans la suite de la description, un fournisseur de services peut être indifféremment un opérateur de réseau de communication, le réseau pouvant être de type public ou privé. Les services de communications sont relatifs à des services numériques et peuvent être liés à des services pour une clientèle grand public ou pour des entreprises sur des réseaux fixes ou des réseaux mobiles. Le document WO 2020/239704 A1 (ORANGE [FR]) 3 décembre 2020 (2020-12-03) divulgue un module centralisé gérant des demandes/offres.

Il est à noter que les techniques permettant de réduire ces consommations sont le plus souvent mises en œuvre dans les réseaux mobiles, d'une part parce que le trafic sur ces réseaux augmente façon très important et que l'impact de nouvelles techniques sera d'autant plus important et d'autre part en raison de l'architecture de ces réseaux d'accès mobiles requérant des antennes et des équipements de routage plus disséminés sur un territoire, accroissant les coûts de déploiement et d'activation associés. Par ailleurs, les fournisseurs de services ont très souvent déployé leurs propres architectures pour assurer une couverture géographique de leurs clients respectifs et pour une zone ou un territoire donné, il faut considérer autant d'architectures de réseaux mobiles associés. Les réseaux déployés sont le plus souvent dimensionnés pour assurer l'acheminement des données en période de fort trafic et que d'autre part, pour une zone géographique donnée, plusieurs architectures de réseaux sont présentes. Les différents réseaux de fournisseurs de services disposent donc de ressources régulièrement sous-utilisées, notamment en période de moindre trafic, par exemple la nuit, mais qui requièrent individuellement des ressources énergétiques.

Ainsi, les fournisseurs de services, de façon autonome, mettent en œuvre diverses solutions pour faire diminuer leurs propres consommations énergétiques, en collaborant avec les fournisseurs d'équipements de réseaux pour que la consommation énergétique de ces équipements soit moindre. La mise en veille certains équipements voire de certaines fonctions lorsqu'elles ne sont pas nécessaires, en recourant à des fonctions virtualisées possiblement déployées et activées en fonction des besoins, peut également être effectuée, réduisant le coût associé à l'acheminement de données dans un réseau. Da façon plus précise, selon les techniques aujourd'hui utilisées, si un fournisseur de services de téléphonie mobile (MNO) souhaite limiter la consommation énergétique de son réseau mobile, il peut éteindre certaines bandes de fréquence (eg : bande des 2600 MHz et 1800 MHz) mais il doit en maintenir active au moins une pour assurer une connectivité aux quelques utilisateurs ayant besoin de connectivité la nuit (ex : la bande des 800 MHz qui couvre la plus grande superficie autour des stations d'accès). Un MNO peut également réduire la bande-passante qu'il alloue à ses utilisateurs et/ou éteindre des équipements virtuels en fonction des besoins des clients. De la même façon, des acteurs/fournisseurs de services qui partagent une infrastructure partagée peuvent éteindre les équipements qui ne sont pas nécessaires pour leurs besoins ou pour leurs clients.

Ces solutions permettent effectivement d'apporter une réponse aux objectifs et aux engagements de réduction des consommations de ressources énergétiques mais il est nécessaire d'envisager une ou plusieurs solutions alternatives ou complémentaires pour significativement répondre aux objectifs et aux engagements de réduction toujours plus importants.

La présente invention a pour objet d'apporter des améliorations par rapport à l'état de la technique.

### 3. Exposé de l'invention

L'invention vient améliorer la situation à l'aide d'un procédé tel que défini dans la revendication 1.

Le procédé de substitution est avantageux car il permet qu'un fournisseur de services achemine les données de communication, pour un ou plusieurs services de communications, en lieu et place d'une pluralité de fournisseurs de services. Ainsi, le procédé permet que les fournisseurs de services n'acheminent plus de données et puissent ainsi éteindre leurs réseaux ou puissent les mettre en veille et ainsi économiser des ressources, notamment de type énergétique. Le procédé de substitution est vertueux puisque le fournisseur de services actif en charge d'acheminer les données change dans le temps et permet aux différents fournisseurs de services de la pluralité de devenir un fournisseur de services actif afin que chaque fournisseur de services de la pluralité puisse économiser des ressources lorsqu'il n'est pas actif. Le procédé de substitution peut notamment être mis en œuvre pendant une durée déterminée, par exemple lorsque le trafic à acheminer est moindre, sous condition que le fournisseur de services actif ait les capacités nécessaires pour acheminer les données normalement acheminées par une pluralité de fournisseurs de services. Ainsi, grâce à des valeurs de rétribution associées au rôle actif ou non - actif d'un fournisseur de services, il est possible pour l'entité de médiation de déterminer, pour une prochaine durée, un fournisseur de services parmi la pluralité pour devenir actif en fonction de la rétribution et donc de sa contribution à l'acheminement lors de périodes précédentes. Le procédé de substitution est donc avantageux puisque chaque fournisseur de services est incité à participer et à devenir régulièrement actif en contrepartie de la possibilité à d'autres moments de devenir non-actif et de pouvoir économiser des ressources. L'entité de médiation permet aux fournisseurs de services contribuant au procédé de substitution de ne pas s'échanger de données directement. L'entité de médiation peut ainsi garantir de l'authenticité des messages de requête mais aussi de la confidentialité des informations transmises dans le message de requête, et notamment du paramètre d'interaction transmis par les fournisseurs de services. Ce paramètre d'interaction est utilisé par l'entité de médiation pour s'assurer que chaque fournisseur de services contribue positivement au procédé en assurant bien la fonction de fournisseur de services actif et pour identifier un fournisseur de services qui n'effectuerait que des demandes de substitution, auquel cas cet opérateur sera incité par l'entité de médiation pour devenir opérateur actif lors d'un cycle suivant, un cycle correspondant à un nombre de messages échangés entre l'envoi de deux messages d'information successifs. Un nouveau message d'information transmis comprend l'identifiant du fournisseur de services actif identifié par l'entité de médiation suite à la mise en œuvre du procédé lors du cycle précédent. Les cycles successifs, au cours desquels un fournisseur de services, par exemple ayant fait économiser le moins de ressources aux autres fournisseurs de service, est sélectionné comme opérateur actif ne sont pas forcément contigus et peuvent être exécutés par exemple à une certaine période de la journée, par exemple de minuit à six heures du matin chaque journée.

Selon un aspect de l'invention, dans le procédé de substitution, le paramètre d'interaction entre chaque fournisseur de services comprend un paramètre de demande de substitution d'un fournisseur de services de la pluralité à chacun des autres fournisseurs de services de la pluralité, et un paramètre d'offre de substitution d'un fournisseur de services de la pluralité à chacun des autres fournisseurs de services de la pluralité.

Le paramètre d'interaction se structure avantageusement en une demande de substitution transmise par une entité de gestion d'un fournisseur de services de la pluralité et une offre de substitution permettant à un fournisseur de services de se proposer comme fournisseur de services actif, par exemple à la réception d'un message d'information lui indiquant qu'il a été déterminé comme fournisseur de services actif pour le prochain cycle. Un fournisseur de services peut ainsi, via ces informations, requérir auprès d'un autre fournisseur de services l'acheminement de ses données ou bien proposer à d'autres fournisseurs de services d'acheminer leurs données, par exemple pendant une durée de cycle.

Selon un aspect de l'invention, dans le procédé de substitution, la mise à jour du paramètre d'interaction en fonction des messages de requête reçus comprend la configuration dans le message de notification émis à destination de l'entité de gestion du fournisseur de services actif des demandes de substitution reçues dans les messages de requête émis par les fournisseurs de services non actifs de la pluralité.

Le procédé de substitution n'étant pas basé sur des échanges directs de messages, c'est-à-dire sans intermédiaire, entre les entités de gestion des fournisseurs de services respectifs de la pluralité contribuant au procédé de substitution, l'entité de médiation a pour objet d'une part de partager les offres et demandes d'un fournisseur de services vers les autres fournisseurs de services, de traiter ces offres et demandes et également de s'assurer que les différents fournisseurs de services contribuent effectivement au procédé de substitution en vérifiant les messages reçus. Le cas échéant, l'entité de médiation peut mettre un fournisseur de services sur liste noire en modifiant le paramètre d'interaction en fonctions des messages reçus.

Selon un autre aspect de l'invention, dans le procédé de substitution, le paramètre d'interaction mis à jour du message de requête comprend en outre une donnée relative à la technologie d'un réseau de communication du fournisseur de services dont l'entité de gestion émet le message de requête.

Le paramètre d'interaction des messages de requête peut être avantageusement modifié pour inclure une information sur la technologie utilisée par le fournisseur de services pour transmettre les données. La donnée relative à la technologie peut indifféremment être une donnée relative au type de réseau opéré, par exemple de type 2G, 3G, 4G ou 5G, et/ou une bande de fréquences utilisée par le fournisseur de services, et/ou une information sur la bande passante utilisée par un fournisseur de services pour l'acheminement des données. L'entité de médiation, et finalement le fournisseur de services actif, prend en compte ces informations pour respectivement sélectionner un fournisseur de services actif et acheminer les données en utilisant la technologie utilisée par le fournisseur de services souhaitant être substitué via le paramètre d'interaction.

Selon un autre aspect de l'invention, dans le procédé de substitution, le message de notification comprend en outre une information indiquant si le fournisseur de services dont l'entité de gestion reçoit le message de notification est retiré de la pluralité dans la mise en œuvre du procédé de substitution.

Le procédé de substitution est vertueux si les différents fournisseurs de services contribuent au procédé en étant désigné lors de certains cycles comme fournisseur de services actif et en offrant leur disponibilité pour acheminer les données des autres fournisseurs de services via la mise à jour du paramètre d'interaction. Par exemple, si une entité de gestion n'offre pas de substitution à d'autres fournisseurs de services bien qu'indiqué comme fournisseur de services actif dans un message d'information ou si un fournisseur de services n'a pas indiqué une ressource consommée correcte correspondant à l'acheminement des données des fournisseurs de services de la pluralité, alors il peut être retiré de la pluralité pour un ou plusieurs cycles, l'empêchant ainsi de voir son trafic acheminé par un autre fournisseur de services pendant une période de temps. Les fournisseurs de services contribuant au procédé, en ayant connaissance qu'un des fournisseurs de services est retiré de la pluralité via l'information dans le message de notification, sait qu'il doit assurer l'acheminement des données de façon plus fréquente. Selon un autre aspect de l'invention, dans le procédé de substitution, le message de notification comprend en outre une donnée relative à la consommation de ressources économisée par la substitution des fournisseurs de services de la pluralité par le fournisseur de services actif.

Le procédé de substitution vise à ce que les fournisseurs de services contribuant au procédé aient une consommation de ressources équilibrée pour l'acheminement des données sur un ensemble de cycles. Cette donnée sur la consommation de ressources peut être la ressource économisée pour les fournisseurs de services non actifs et la ressource consommée pour le fournisseur de services actif. Ainsi chaque entité de gestion peut être informée de l'économie ou de la dépense estimée dans la mise en œuvre du procédé et s'assurer de façon individuelle que le procédé n'avantage pas un fournisseur de services par rapport à un autre. Cette donnée permet en outre de comparer la valeur estimée avec la valeur calculée et le cas échéant informer l'entité de médiation, voire une entité d'enregistrement de la différence, pour que la détermination d'un fournisseur de services actif lors d'un prochain cycle le prenne en compte.

Selon un autre aspect de l'invention, dans le procédé de substitution, la valeur d'état indique une fin de négociation si le paramètre d'interaction du message de requête émis par le fournisseur de services actif comprend un paramètre d'offre de substitution ou si le nombre de messages de requête et/ou de notification atteint une valeur prédéterminée. L'entité de médiation positionne la valeur d'état, tel qu'un élément binaire, lorsqu'un des fournisseurs de services de la pluralité est en position d'assurer l'acheminement des données en lieu et place des fournisseurs de services de la pluralité, par exemple pour une période donnée. Cela peut notamment se produire lorsque le fournisseur de services actif est en capacité de répondre favorablement aux demandes de substitutions demandées par les autres fournisseurs de services. La valeur d'état peut également indiquer un nombre de messages de requête et de notification atteint une valeur prédéfinie, indiquant qu'aucun accord de substitution a pu être établi. Une fois que la valeur d'état indique une fin de négociation, les réseaux de fournisseurs de services, par exemple en utilisant des techniques d'itinérance, peuvent être configurés pour que l'acheminement des données normalement effectué par la pluralité des fournisseurs de services soit effectué par le fournisseur de services actif.

Selon un autre aspect de l'invention, dans le procédé de substitution, la valeur de rétribution est relative à l'économie de ressources générée par le fournisseur de services destinataire.

Le procédé de substitution visant à ce que des fournisseurs de services de la pluralité assurent l'acheminement des données de la pluralité tout en garantissant un équilibre des ressources utilisées pour les acheminements successifs par les fournisseurs de services actifs, le fournisseur de services de la pluralité sélectionné pour assurer l'acheminement des données est celui qui aura le plus faiblement contribué à une économie de ressources des autres fournisseurs de services. La valeur de rétribution, par exemple cumulée sur un ensemble de cycles de substitution, indiquant l'économie de ressources générée par un fournisseur de services peut être avantageusement utilisé pour la détermination de l'opérateur actif. Plus la valeur est proche de 0, moins le fournisseur de services aura à consommer de ressources, ce qui a pour conséquence qu'il aura plus de probabilité d'être déterminé fournisseur de services actif lors de l'une des substitutions suivantes.

Selon un autre aspect de l'invention, dans le procédé de substitution, un nouveau fournisseur de services actif est en outre déterminé en fonction des valeurs de rétribution émises et/ou en fonction d'une ressource consommée par le fournisseur de services actif pour l'acheminement des données de communication en substitution aux fournisseurs de services de la pluralité.

Le fournisseur de services actif peut être déterminé en tirant parti d'une information sur les ressources consommées pour l'acheminement de données lorsqu'il assure l'acheminement en lieu et place des autres fournisseurs de services ou bien en fonction des valeurs de rétribution émises par l'entité de médiation ou bien encore en utilisant les deux paramètres. L'information sur les ressources effectivement consommées permet par exemple de corriger les différences entre les valeurs de consommation estimées et les valeurs consommées, cette valeur de ressources consommées pouvant être obtenue auprès d'une entité d'enregistrement, telle qu'un serveur utilisant la technologie DLT (en anglais Distributed Ledger Technology). La valeur de rétribution permet de s'assurer que chaque fournisseur de services contribue au procédé de façon équilibrée, en s'assurant d'une juste répartition de la contribution de chaque fournisseur de la pluralité.

Les différents aspects du procédé de substitution qui viennent d'être décrits peuvent être mis en œuvre indépendamment les uns des autres ou en combinaison les uns avec les autres.

L'invention concerne également un procédé tel que défini dans la revendication 10.

Selon un aspect de l'invention, dans le procédé de détermination, la mise à jour du paramètre d'interaction dans les messages de requête comprend la mise à jour d'un paramètre de demande de substitution d'un fournisseur de services non - actif de la pluralité au fournisseur de services actif en fonction de l'identifiant du fournisseur de services actif reçu dans le message de notification ou à l'offre de substitution par le fournisseur de services actif aux fournisseurs de services non-actifs en fonction des paramètres de demande reçus dans les messages de notification.

La mise à jour du paramètre d'interaction par les entités respectives contribuant au procédé permet de pouvoir partager les informations en l'absence d'échanges directs entre les entités de gestion et également pour l'entité de médiation de pouvoir contrôler les demandes et les offres pour notamment s'assurer de l'équilibre des ressources consommées par les différents fournisseurs de services.

Selon un aspect de l'invention, le procédé de détermination comprend en outre l'émission par le fournisseur de services actif à destination d'une entité d'enregistrement d'une ressource consommée pour acheminer les données de communication en substitution aux fournisseurs de services de la pluralité.

En l'absence de la transmission de ressource consommée, le procédé repose sur des estimations, via notamment la donnée relative à la consommation possiblement transmise aux entités de gestion. La ressource consommée transmise à l'entité d'enregistrement a pour objectif un contrôle effectif des consommations de chaque fournisseur de services lors des substitutions successives et donc d'améliorer le processus de détermination du prochain fournisseur de services actif parmi la pluralité.

Les différents aspects du procédé de détermination qui viennent d'être décrits peuvent être mis en œuvre indépendamment les uns des autres ou en combinaison les uns avec les autres.

L'invention concerne également un dispositif tel que défini dans la revendication 13.

Ce dispositif est apte à mettre en œuvre dans tous ses modes de réalisation le procédé de substitution qui vient d'être décrit.

L'invention concerne également un dispositif tel que défini dans la revendication 14.

Ce dispositif est apte à mettre en œuvre dans tous ses modes de réalisation le procédé de détermination qui vient d'être décrit.

L'invention concerne également un système tel que défini dans la revendication 15.

L'invention concerne aussi des programmes d'ordinateur comprenant des instructions pour la mise en œuvre des étapes des procédés respectifs de substitution et de détermination qui viennent d'être décrits, lorsque ces programmes sont l'un et l'autre exécutés par un processeur et un support d'enregistrement lisible respectivement par un dispositif de substitution et de détermination sur lesquels sont enregistrés les programmes d'ordinateurs.

Les programmes mentionnés ci-dessus peuvent utiliser n'importe quel langage de programmation, et être sous la forme de code source, code objet, ou de code intermédiaire entre code source et code objet, tel que dans une forme partiellement compilée, ou dans n'importe quelle autre forme souhaitable.

Les supports d'informations mentionnés ci-dessus peuvent être n'importe quelle entité ou dispositif capable de stocker le programme. Par exemple, un support peut comporter un moyen de stockage, tel qu'une ROM, par exemple un CD ROM ou une ROM de circuit microélectronique, ou encore un moyen d'enregistrement magnétique.

Un tel moyen de stockage peut par exemple être un disque dur, une mémoire flash, etc. D'autre part, un support d'informations peut être un support transmissible tel qu'un signal électrique ou optique, qui peut être acheminé via un câble électrique ou optique, par radio ou par d'autres moyens. Un programme selon l'invention peut être en particulier téléchargé sur un réseau de type Internet.

Alternativement, un support d'informations peut être un circuit intégré dans lequel un programme est incorporé, le circuit étant adapté pour exécuter ou pour être utilisé dans l'exécution des procédés en question.

### 4. Brève description des dessins

D'autres caractéristiques et avantages de l'invention apparaîtront plus clairement à la lecture de la description suivante de modes de réalisation particuliers, donnés à titre de simples exemples illustratifs et non limitatifs, et des dessins annexés, parmi lesquels :
La [Fig 1] présente une vue simplifiée d'un schéma présentant un intérêt du procédé de substitution et du procédé de détermination selon un aspect de l'invention,
La [Fig 2] présente une vue simplifiée d'une architecture dans laquelle est mise en œuvre le procédé de substitution et le procédé de détermination selon un autre aspect de l'invention,
La [Fig 3] présente une vue simplifiée d'un procédé de substitution et d'un procédé de détermination selon un autre aspect de l'invention,
La [Fig 4] présente un dispositif de substitution selon un mode de réalisation de l'invention,
La [Fig 5] présente un dispositif de détermination selon un mode de réalisation de l'invention.

### 5. Description des modes de réalisation

Dans la suite de la description, on présente des modes de réalisation de l'invention dans une architecture de communication. Cette infrastructure peut être mise en œuvre pour acheminer des données de communications d'une pluralité de fournisseur de services, donc au moins deux, à destination de terminaux fixes ou mobiles sachant qu'un des objectifs du procédé de substitution et du procédé de détermination est de pouvoir faire acheminer les données de communication normalement acheminées par l'ensemble des fournisseurs de services par un nombre restreint de fournisseur de services de façon notamment à réduire les ressources, notamment énergétiques, consommées pour l'acheminement des données.

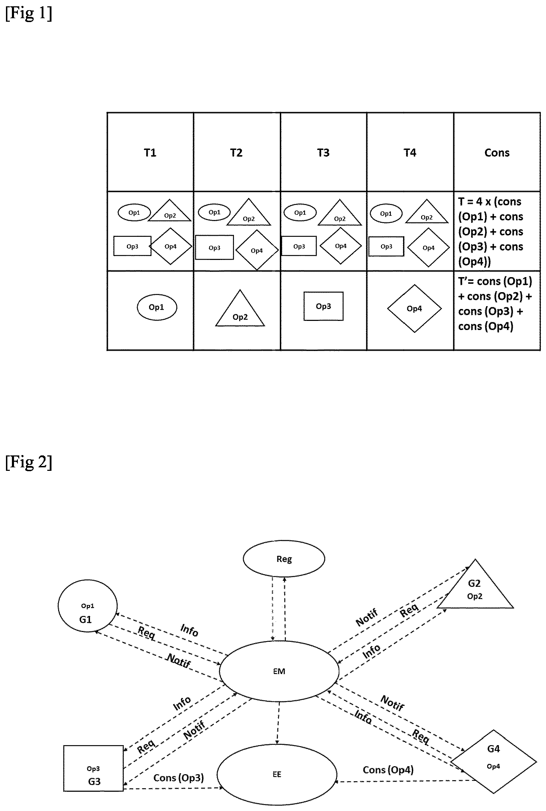

On se réfère tout d'abord à la [Fig 1] qui présente une vue simplifiée d'un schéma présentant un intérêt du procédé de substitution et du procédé de détermination selon un aspect de l'invention.

Dans ce schéma, quatre intervalles de temps T1, T2, T3, T4 sont représentés et sont par exemple des durées pendant lesquelles le procédé de substitution est mis en œuvre. Il peut s'agir d'intervalles de temps pendant une journée, pendant une semaine ou pendant une autre période. Selon un exemple, il s'agit d'intervalles de temps pendant lesquels des réseaux de fournisseur de services sont moins utilisés, typiquement de 0 à 6 heures du matin.

Dans ce schéma sont également représentés quatre fournisseurs de services Op1, Op2, Op3 et Op4 qui sont, selon cet exemple, des fournisseurs de services de réseaux mobiles fournissant un service d'accès et d'acheminement de données de communication pour leurs clients respectifs. Il est considéré que les 4 fournisseurs de services Op1, Op2, Op3 et Op4 opèrent des réseaux ayant chacun une empreinte géographique comparable et que chaque fournisseur de services est en mesure de fournir un accès et un acheminement des données reçues et émises par les trois autres fournisseurs de services. Il est considéré ici que le service d'acheminement comprend également le service d'accès à un réseau de communication. Selon cet exemple, il est considéré en outre que chaque fournisseur de services Op1, Op2, Op3 et Op4 dispose d'un réseau pouvant acheminer les données des clients des autres fournisseurs de services, ce qui est ici rendu possible par le fait que les intervalles T1, T2, T3 et T4 sont des périodes pendant lesquelles les réseaux de communications sont moins sollicités et qu'un réseau suffit pour acheminer les données de clients normalement par les quatre fournisseurs de services Op1, Op2, Op3 et Op4. En période distincte des intervalles T1, T2, T3, T4 les données sont en effet acheminées par les 4 fournisseurs de services Op1, Op2, Op3 et Op4.

Lors de l'intervalle de temps T1, via la mise en œuvre du procédé de substitution et du procédé de détermination, le fournisseur de services Op1 se substitue aux fournisseurs de services Op1, Op2, Op3 et Op4 pour acheminer les données de ces fournisseurs de services. Ainsi, pendant l'intervalle de temps T1, seul le fournisseur de services Op1 active ses bandes de fréquences et les équipements réseaux pour assurer le service de connectivité et d'acheminement des données des clients des quatre fournisseurs de services Op1, Op2, Op3 et Op4, ce qui a pour effet que les 3 autres fournisseurs de services Op2, Op3, Op4 peuvent stopper l'activation de leurs propres bandes de fréquences et les équipements réseaux, leur permettant de pouvoir économiser des ressources, notamment de type énergétiques mais aussi les ressources associées à la gestion des réseaux respectifs mis en sommeil pendant cet intervalle T1. Les ressources peuvent également être des giga-octets puisqu'un fournisseur de services se substituant aux autres transmet des giga-octets de données en lieu et place d'autres fournisseurs de services. Les techniques utilisées par le fournisseur de services Op1 en charge de l'acheminement des données des clients des quatre fournisseurs de services peuvent être indifféremment basées sur des techniques d'itinérance (en anglais roaming) ou bien de partage d'accès (en anglais RAN sharing). Au moins un fournisseur de services doit assurer l'acheminement des données pendant un intervalle de temps sachant qu'en cas de besoin, c'est-à-dire de fort trafic, deux fournisseurs de services pourraient assurer l'acheminement des données des quatre fournisseurs de services.

Lors de l'intervalle de temps T2, un autre fournisseur de services de la pluralité assure le service d'acheminement de données de communication pour le compte des quatre fournisseurs de services Op1, Op2, Op3 et Op4. Le procédé de substitution repose sur la contribution de chaque fournisseur de services de la pluralité à l'acheminement des données de l'ensemble des fournisseurs de services à un intervalle de temps donné. Ainsi, lors de l'intervalle T2, l's Op2 assure l'acheminement des données en lieu et place des quatre fournisseurs de services Op1, Op2, Op3 et Op4. De la même façon, lors de l'intervalle T3, le fournisseur de services Op3 assure l'acheminement des données en substitution des quatre fournisseurs de services Op1, Op2, Op3 et Op4 et à l'intervalle T4, le fournisseur de services Op4 assure le service d'acheminement. L'objectif étant que chaque fournisseur de services contribue de façon équivalente au procédé de substitution, dans le cas où chaque fournisseur de services consomme théoriquement le même montant de ressources aux différents intervalles, un roulement cyclique des fournisseurs de services pour assurer l'acheminement des données peut être mis en œuvre. Cependant, les fournisseurs de services ne consomment pas forcément le même niveau de ressources, donc les opérateurs ne font pas économiser le même montant de ressources aux autres fournisseurs de services lors des différents intervalles de temps d'un cycle, le cycle pouvant correspondre à une période pendant laquelle un fournisseur de services s'est au moins substitué une fois aux autres fournisseurs de services. Selon un exemple, le fournisseur de services ayant fait économiser le moins de ressources aux autres fournisseurs de services, lors d'un cycle ou en cumul de plusieurs cycles, assure l'acheminement lors du prochain intervalle. Par exemple, dans une configuration à deux MNOs (en anglais Mobile Network Opérateurs) (MNO-A et MNO-B) où le réseau du MNO-A consomme 40kWH et celui du MNO-B seulement 20 kWh, à ce moment-là, dans le cas où la substitution est activée la nuit, l'EM fera en sorte de mettre le MNO-A actif pendant 2 nuits sur 3 et le MNO-B pendant 1 nuit sur 3. Ainsi le MNO-B n'est pas lésé car lorsque MNO-B est actif, il fait économiser 40 kWH à MNO-A, alors que lorsque le MNO-A est actif, il ne fait économiser que 20 kWH au MNO-B.

Selon le schéma de la [Fig 1], dans le cas où lors de chaque intervalle T1, T2, T3, T4, chaque fournisseur de services Op1, Op2, Op3 et Op4 consomme un même montant de ressources, la consommation Cons de ressources pendant les 4 intervalles T1, T2, T3, T4 équivaut à la somme des consommations de ressources de chaque fournisseur de services au lieu de quatre fois la somme des consommations de ressources de chaque fournisseur de services. Selon cet exemple simplifié, les ressources ont été divisées par quatre pour l'acheminement d'un même volume de données. Il faut noter que cette comparaison résulte d'une estimation très simplifiée où le coût pour un fournisseur de services pour acheminer des données ne résulte pas que de l'acheminement des données elles-mêmes mais aussi d'un coût résiduel d'activation de réseaux et de gestion indépendants de l'acheminement de données. La mise en veille de trois fournisseurs de services pendant les périodes T1, T2, T3 et T4 fait donc diminuer et même disparaitre de façon conséquente les ressources liées au fonctionnement de trois réseaux parmi quatre.

Le procédé de substitution reposant sur une contribution active de chaque fournisseur de services au procédé, la mise en œuvre d'une entité de médiation pour assurer qu'aucun fournisseur de services n'est lésé s'avère avantageux comme précisé dans la [Fig 2].

Dans la [Fig 2], les quatre fournisseurs de services sont des opérateurs Op1, Op2, Op3 et Op4 sont également représentés. Chaque opérateur Op1, Op2, Op3 et Op4 comprend une entité de gestion, respectivement G1, G2, G3, G4. Selon un exemple, ces entités de gestion sont des entités d'administration des réseaux des opérateurs G1, G2, G3 et G4. Ces entités de gestion G1, G2, G3, G4 sont aptes à échanger des informations avec une entité de médiation EM. Selon un exemple, cette entité de médiation EM est une plate-forme de collaboration gérée par une entité tierce, telle qu'un régulateur, un fournisseur de ressources ou une entité d'administration d'une plaque géographique. Selon un autre exemple, cette entité de médiation EM gère la substitution en se basant sur les ressources consommées par les opérateurs Op1, Op2, Op3 et Op4 pour acheminer des données de communications. Selon une alternative, l'entité de médiation interagit avec une entité Reg de régulation. Cette entité de régulation a pour rôle par exemple de sélectionner les opérateurs qui collaborent au procédé de substitution, d'identifier un opérateur qui ne collaborerait de façon satisfaisante au procédé et le cas échéant de le retirer du procédé pendant un ou plusieurs cycles. L'entité de régulation peut selon un exemple être propre à une zone géographique, par exemple d'un pays, ou bien associée à un service de communications en particulier dans le cas notamment où les données acheminées par un opérateur en substitution d'une pluralité d'opérateurs sont relatives à un service de communications en particulier. Selon un exemple, les entités de régulation Reg et de médiation EM sont gérées par une seule et même entité. Selon une alternative, l'architecture de communication dans laquelle est mis en œuvre le procédé de substitution comprend en outre une entité d'enregistrement EE. Cette entité d'enregistrement EE a pour exemple pour objet de collecter les informations relatives à un acheminement de données lors de la mise en œuvre du procédé de substitution. Ainsi, la consommation réelle de ressources par un opérateur dit actif, c'est-à-dire pour assurer l'acheminement de données en lieu et place d'autres opérateurs pendant une durée déterminée, peut être enregistrée et le cas échéant comparée avec une valeur théorique initialement déterminée lors de la détermination de l'opérateur actif par exemple. Selon un exemple, cette entité d'enregistrement interagit avec les entités de gestion G1, G2, G3, G4 des opérateurs et avec l'entité de médiation EM. Cette entité d'enregistrement EE utilise par exemple la technologie DLT (en anglais Distributed Ledger Technology). Dans le cas où les ressources consommées sont des watts-heure, les entités de gestion peuvent transmettre les watts heures consommés lorsque les opérateurs successivement effectuent l'acheminement des données et ensuite comparer ces valeurs avec les valeurs théoriques choisies pour déterminer un opérateur actif parmi la pluralité par exemple. Ainsi, à partir d'informations réellement constatées et transmises par l'entité d'enregistrement EE à l'entité de médiation EM, cette dernière peut corriger les possibles erreurs pour améliorer la détermination la sélection d'un opérateur actif pour un prochain intervalle de temps par exemple en utilisant la valeur consommée cumulée par les différents opérateurs lors de leurs tours de garde où ils ont successivement assuré l'acheminement des données. Il convient en outre de noter également qu'une transparence sur le nombre de ressources réellement consommées, lorsque cette information est largement disponible, par exemple via la DLT mentionnée précédemment, est incitative si au moins 2 opérateurs collaborent. En effet, les opérateurs réticents à collaborer verront via les données partagées publiquement que les opérateurs qui collaborent ont une consommation de ressources plus faible que la leur, grâce aux intervalles de temps où ils sont inactifs, et pourra inciter les opérateurs ne participant pas au procédé de substitution à contribuer par exemple en s'identifiant auprès de l'entité de régulation Reg.

Le procédé de substitution mis en œuvre par l'entité de médiation EM comprend une étape facultative d'envoi par l'entité de régulation Reg d'un message de configuration comprenant un ensemble d'opérateurs contribuant au procédé de substitution et possiblement sur une identification d'opérateurs à retirer du procédé (en anglais blacklisted operators) qu'il convient de ne pas retenir pour un ou plusieurs cycles. Ce message de configuration peut comprendre les identifiants des opérateurs Op1, Op2, Op3, Op4 retenus ou à retirer dans le procédé ainsi que les informations permettant à l'entité de médiation de les solliciter, telles que les informations relatives aux entités de gestion G1, G2, G3, G4 de ces opérateurs.

L'entité de médiation transmet, par exemple suite à ce message de configuration ou bien de façon autonome si l'entité de médiation EM identifie de façon autonome par configuration ou bien par sollicitation des opérateurs Op1, Op2, Op3, Op4, un message d'information Info aux entités de gestion G1, G2, G3, G4 des différents opérateurs Op1, Op2, Op3, Op4 leur indiquant quel opérateur parmi les quatre a été sélectionné comme opérateur actif, possiblement avec une indication sur l'intervalle de temps pendant lequel l'opérateur est actif. Ce message d'information Info comprend en outre un paramètre d'interaction entre les différents opérateurs Op1, Op2, Op3, Op4 comprenant donc une donnée d'interaction entre Op1 et Op2, entre Op1 et Op3, entre Op1 et Op4, entre Op2 et Op3, etc...Selon un exemple, une entité de gestion G1, G2, G3, G4 ne reçoit que les données d'interaction concernant l'opérateur destinataire du message d'information. Ainsi, l'entité de gestion G1 ne reçoit que les données d'interaction concernant l'opérateur Op1. Un opérateur n'est pas uniquement une entité opérant un réseau et comprend également les entités fournissant un service, par exemple de type OTT (en anglais Over The Top).

Les entités de gestion G1, G2, G3, G4 ayant reçu le message d'information Info transmettent à l'entité de gestion EM un message Req de requête comprenant le paramètre d'interaction mis à jour. Par exemple, les opérateurs ayant reçu l'information sur l'opérateur actif identifié, peuvent transmettre à l'entité de médiation une demande de substitution par l'opérateur identifié comme actif. Ainsi si l'opérateur Op1 dont l'identifiant a été transmis dans le message d'information Info comme l'opérateur actif, les entités de gestion G2, G3, G4 des opérateurs Op2, Op3, Op4 peuvent transmettre une demande de substitution des opérateurs respectifs Op2, Op3 et Op4 par l'opérateur Op1, ces messages comprenant l'identifiant de l'opérateur Op2, Op3, Op4 sollicitant la demande.

L'entité de médiation EM, à la réception de ces messages Req de requête émis par les entités de gestion G1, G2, G3, G4, identifie les différentes demandes de substitution ainsi que les offres de substitution, met à jour le paramètre d'interaction et fait part aux entités de gestion G1, G2, G3 et G4 dans un message Notif de notification des différentes demandes reçues à l'opérateur ou aux opérateurs ayant formulé des offres. Ce message de notification permet notamment aux entités de gestion des opérateurs ayant fait une offre de substitution de prendre connaissance des demandes. Dans le cas présent, l'opérateur Op1 prend connaissance des demandes effectuées par les opérateurs Op2, Op3 et Op4. Ces messages de notification Notif comprennent en outre une valeur de rétribution de chaque opérateur dans la substitution, indiquant par exemple un volume de ressources économisé ou un volume de ressources à consommer par chaque opérateur ayant transmis une demande de substitution, cette valeur pouvant en outre dépendre du nombre de messages de requête échangés avec l'entité de médiation, l'objectif étant de parvenir à un accord de substitution avec le minimum de messages de requête transmis. Les messages de notification Notif comprennent en outre une valeur d'état indiquant si le procédé de substitution est finalisé et peut être établi. Il peut s'agir d'une valeur booléenne indiquant si le procédé est finalisé (valeur 1) ou non (valeur 0). Dans le cas où les messages comprennent la valeur 0, les entités de gestion G1, G2, G3, G4 doivent transmettre de nouveaux messages de requête Req avec de nouveaux paramètres d'interaction, par exemple avec de nouvelles offres et demandes. L'entité de médiation EM transmettra en retour des messages de notification Notif en répercutant les différentes offres et demandes, et en mettant à jour les valeurs de rétribution puisque de nouveaux messages sont échangés et en mettant la valeur d'état à jour. Ces échanges de messages de requête et de notification durent aussi longtemps que la valeur d'état n'a pas la valeur 1 indiquant que le procédé est finalisé ou bien indiquant qu'un nombre de messages a été atteint sans qu'il ne soit possible qu'un accord de substitution ou des offres correspondent aux demandes ne puisse être obtenu.

Dans le cas où le procédé est finalisé, et qu'une substitution peut être mise en œuvre, celle-ci s'opère via les techniques connues d'itinérance ou de RAN sharing ou toute autre technique permettant cette substitution, et une nouvelle substitution pourra être mise en œuvre, l'entité de médiation EM sélectionnant un nouvel opérateur actif, par exemple en choisissant l'opérateur parmi les opérateurs Op1, Op2, Op3, Op4 celui ayant permis d'économiser le moins de ressources aux autres opérateurs en valeur cumulée des différents procédés de substitution mis en œuvre, par exemple via les valeurs de rétribution possiblement corrigées par les données de consommation (représentées dans la [Fig 2] par les informations Cons (Op3) et Cons (Op4)) transmises par les opérateurs entités de gestion G1, G2, G3, G4 des opérateurs Op1, Op2, Op3, Op4 à l'entité d'enregistrement EE que celle-ci peut avantageusement retransmettre à l'entité de médiation EM pour améliorer la détermination du prochain opérateur actif.

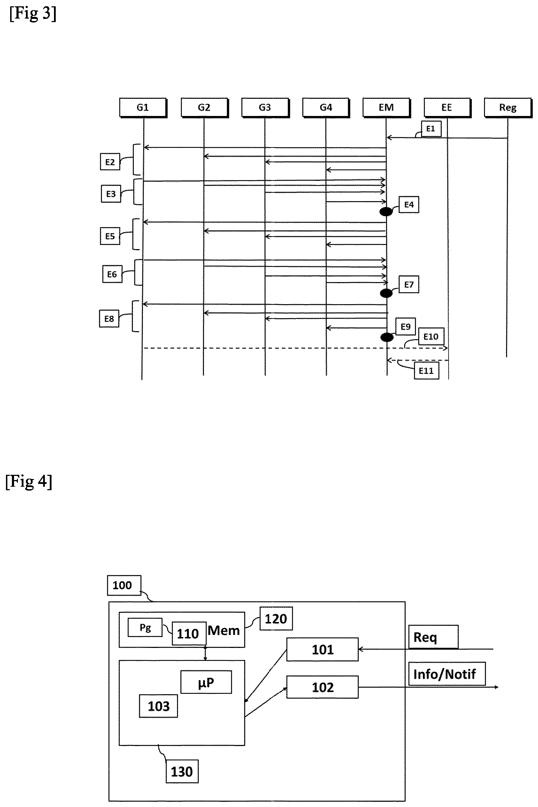

On se réfère ensuite à la [Fig 3] qui présente une vue simplifiée d'un procédé de substitution et d'un procédé de détermination selon un autre aspect de l'invention.

Dans cette [Fig 3], sont représentées les entités G1, G2, G3, G4, EM, EE et Reg présentées et décrites dans la [Fig 2].

Lors d'une étape E1, l'entité de régulation Reg transmet à l'entité de médiation un message lui indiquant les fournisseurs de services/opérateurs contribuant au procédé de substitution ainsi que possiblement les fournisseurs de services/opérateurs positionnés sur une liste noire pour ce procédé de substitution.

Lors d'une étape E2, l'entité EM transmet aux entités de gestion G1, G2, G3 et G4 un message de notification tel que présenté ci-dessous.

Message d'information Info envoyé par l'entité EM à G1: Info : [demande de Op2 à Op1=0, demande de Op3 à Op1=0, demande de Op4 à Op1=0, offre de Op2 à Op1= 0, offre de Op3 à Op1= 0, offre de Op4 à Op1= 0, onguard-Op1=1, onguard-Op2=0, onguard-Op3=0, onguard-Op4=0, blacklisted-Op1=0, blacklisted -Op2=0, blacklisted - Op3=0, blacklisted -Op4=0 ]

Message d'information Info envoyé à G2 : Info : [demande de Op1 à Op2=0, demande de Op3 à Op2=0, demande de Op4 à Op2=0, offre de Op1 à Op2= 0, offre de Op3 à Op2= 0, offre de Op4 à Op2= 0, onguard-Op1=1, onguard-Op2=0, onguard-Op3=0, onguard-Op4=0, blacklisted-Op1=0, blacklisted -Op2=0, blacklisted -Op3=0, blacklisted - Op4=0 ]

Message d'information Info envoyé à G3 : Info : [demande de Op1 à Op3=0, demande de Op2 à Op3=0, demande de Op4 à Op3=0, offre de Op1 à Op3= 0, offre de Op2 à Op3= 0, offre de Op4 à Op3= 0, onguard-Op1=1, onguard-Op2=0, onguard-Op3=0, onguard-Op4=0, blacklisted-Op1=0, blacklisted -Op2=0, blacklisted -Op3=0, blacklisted - Op4=0 ]

Message d'information Info envoyé à G4 : Info : [demande de Op1 à Op4=0, demande de Op2 à Op4=0, demande de Op3 à Op4=0, offre de Op1 à Op4= 0, offre de Op2 à Op4= 0, offre de Op3 à Op4= 0, onguard-Op1=1, onguard-Op2=0, onguard-Op3=0, onguard-Op4=0, blacklisted-Op1=0, blacklisted -Op2=0, blacklisted -Op3=0, blacklisted -Op4=0 ]

Les messages d'information Info transmis aux entités de gestion G1, G2, G3, G4 des opérateurs Op1, Op2, Op3, Op4 comprennent des paramètres de demande et d'offre de substitution des opérateurs respectifs Op1, Op2, Op3, Op4 à chacun des autres opérateurs Op1, Op2, Op3, Op4 de la pluralité. Dans cet exemple, les opérateurs ne reçoivent les paramètres de substitution, comprenant des offres et des demandes des autres opérateurs qui ne le concernent (l'entité de gestion G1 ne reçoit que les demandes et les offres concernant l'opérateur Op1). L'information onguard-Op1=1 présente dans les messages d'information Info indique aux entités de gestion que l'opérateur Op1 est déterminé comme opérateur actif pour la prochaine substitution. Selon un exemple, le message d'information info peut aussi comprendre une donnée temporelle indiquant un intervalle de temps pendant laquelle la substitution a lieu.

Lors d'une étape E3, les entités de gestion G1, G2, G3 et G4, en réponse au message d'information reçu, émettent à destination de l'entité de médiation EM un message Req de requête comprenant un identifiant de l'opérateur émettant le message de requête et le paramètre d'interaction reçu mis à jour. Ainsi, les messages Req transmis par les entités de gestion respectives sont les suivants par exemple de la forme suivante :
Message de requête Req envoyé par l'entité G1 à l'entité EM: Action : [demande de Op1 à Op2=0, demande de Op1 à Op3=0, demande de Op1 à Op4=0, offre de Op1 à Op2= 0, offre de Op1 à Op3= 0, offre de Op1 à Op3= 0, agent-id=1]
Ce message de requête indique que l'opérateur Op1 ne demande ni n'offre aucun service de substitution aux autres opérateurs et que l'opérateur Op1 dont l'identifiant est 1 transmet ce message.

De la même façon, les entités de gestion G2, G3, G4 transmettent les messages de requête suivants :
Message de requête Req envoyé par l'entité G2 à l'entité EM: Action : [demande de Op2 à Op1=1, demande de Op2 à Op3=0, demande de Op2 à Op4=0, offre de Op2 à Op1= 0, offre de Op2 à Op3= 0, offre de Op2 à Op4= 0, agent-id=2]
Message de requête Req envoyé par l'entité G1 à l'entité EM: Action : [demande de Op3 à Op1=1, demande de Op3 à Op2=0, demande de Op3 à Op4=0, offre de Op3 à Op1= 0, offre de Op3 à Op2= 0, offre de Op31 à Op4= 0, agent-id=3]
Message de requête Req envoyé par l'entité G1 à l'entité EM: Action : [demande de Op4 à Op1=1, demande de Op4 à Op2=0, demande de Op4 à Op3=0, offre de Op4 à Op1= 0, offre de Op4 à Op2= 0, offre de Op4 à Op3= 0, agent-id=4]

Dans ces messages Req, les entités de gestion G2, G3, G4 demandent une substitution des opérateurs Op2, Op3, op4 par l'opérateur Op1 et n'offrent aucune substitution.

Dans cet exemple, ces messages de requête ne comprennent que les interactions dans lesquelles intervient l'opérateur émettant le message de requête.

Selon une alternative, ces messages Req de requête comprennent une donnée relative à la technologie du réseau opéré par l'opérateur émettant le message. Une entité de gestion G1, G2, G3 et G4 peut donc mettre à jour le paramètre d'interaction reçu dans le message d'information avec cette donnée. Cette donnée peut par exemple indiquer la version du réseau cellulaire opéré par l'opérateur (2G, 3G, 4G, 5G...), et/ou indiquer la bande de fréquences utilisée par l'opérateur pour l'accès des clients à son réseau et/ou comprendre une information sur la bande passante utilisée pour l'acheminement des données de communication.

L'utilisation d'actions de demande de substitution et d'offres de substitution permet ainsi à chaque opérateur de choisir de collaborer ou non, indépendamment de l'information concernant l'opérateur actif transmise par l'entité de médiation.

En réception des messages de requête, lors d'une étape E4, l'entité de médiation EM extrait les paramètres d'interaction, les traite et configure dans les messages de notification à transmettre les paramètres d'interaction en fonction des demandes et des offres des différents opérateurs.

L'entité de médiation EM transmet ensuite lors de l'étape E5 à destination des entités de gestion des opérateurs contribuant au procédé de substitution les messages de notification comprenant les paramètres d'interaction configurés lors de l'étape E4. Les messages de notification transmis aux entités de gestion G1, G2, G3, G4 sont, selon une alternative, tels que présentés ci-dessous.

Message de notification Notif envoyé par l'entité EM à G1: Observation : [demande de Op2 à Op1=1, demande de Op3 à Op1=1, demande de Op4 à Op1=1, offre de Op2 à Op1= 0, offre de Op3 à Op1= 0, offre de Op4 à Op1= 0, onguard-Op1=1, onguard-Op2=0, onguard-Op3=0, onguard-Op4=0, blacklisted-Op1=0, blacklisted -Op2=0, blacklisted - Op3=0, blacklisted -Op4=0, rec=-0.01, fin=0]

L'entité de médiation EM indique ainsi via ce message Notif que les opérateurs Op2, Op3 et Op4 ont sollicité une demande de substitution par l'opérateur Op1, qu'aucun opérateur n'a proposé d'offre de substitution, que la valeur de rétribution rec est négative (- 0.01) car il n'y a pas pour l'instant d'accord de substitution et qu'un message est envoyé pour parvenir à cet accord. Cette valeur négative a pour objectif d'inciter l'agent a contribué au procédé de substitution. Le message comprend en outre une valeur d'état (fin) ici positionnée à 0 indiquant une négociation en cours entre les opérateurs pour la mise en œuvre de la substitution.

Les messages de notification Notif transmis par l'entité EM aux entités de gestion G2, G3, G4 sont de la forme suivante :
Message de notification Notif envoyé par l'entité EM à G2: Observation : [demande de Op1 à Op2=0, demande de Op3 à Op2=0, demande de Op4 à Op2=0, offre de Op1 à Op2= 0, offre de Op3 à Op2= 0, offre de Op4 à Op2= 0, onguard-Op1=1, onguard-Op2=0, onguard-Op3=0, onguard-Op4=0, blacklisted-Op1=0, blacklisted -Op2=0, blacklisted - Op3=0, blacklisted -Op4=0, rec=-0.01, fin=0]
Message de notification Notif envoyé par l'entité EM à G3: Observation : [demande de Op1 à Op3=0, demande de Op2 à Op3=0, demande de Op4 à Op3=0, offre de Op1 à Op3= 0, offre de Op2 à Op3= 0, offre de Op4 à Op3= 0, onguard-Op1=1, onguard-Op2=0, onguard-Op3=0, onguard-Op4=0, blacklisted-Op1=0, blacklisted -Op2=0, blacklisted - Op3=0, blacklisted -Op4=0, rec=-0.01, fin=0]
Message de notification Notif envoyé par l'entité EM à G4: Observation : [demande de Op1 à Op4=0, demande de Op2 à Op4=0, demande de Op3 à Op4=0, offre de Op1 à Op4= 0, offre de Op2 à Op4= 0, offre de Op3 à Op4= 0, onguard-Op1=1, onguard-Op2=0, onguard-Op3=0, onguard-Op4=0, blacklisted-Op1=0, blacklisted -Op2=0, blacklisted - Op3=0, blacklisted -Op4=0, rec=-0.01, fin=0]

Les messages de notification peuvent en outre comprendre une information indiquant si un ou plusieurs opérateurs recevant le message de notification est retiré du précédé, c'est-à-dire placé sur liste noire, lui indiquant ainsi quels opérateurs ne peuvent participer au procédé de substitution. Un opérateur peut être positionné sur liste noire lorsque par exemple il n'achemine pas les données des autres opérateurs alors que le procédé a abouti et qu'il a été déterminé qu'il était l'opérateur actif. Cette information concernant un opérateur retiré peut être complétée par une information sur la durée pendant laquelle l'opérateur est retiré.

Selon un exemple, les messages de notification peuvent en outre comprendre une donnée relative à la consommation de ressources économisée lors de la prochaine période d'inactivité. Cette donnée peut être une ressource estimée qui pourra être modifiée par les informations réelles de consommation transmises par exemple par l'intermédiaire d'une entité d'enregistrement.

Lors de l'étape E6 les entités de gestion G1, G2, G3 et G4 transmettent un nouveau message de requête Req puisque la valeur d'état (fin) était à 0 dans les messages de notification reçus lors de l'étape E5.

Ces messages de requête ont la forme suivante :
Message de requête Req envoyé par l'entité G1 à l'entité EM: Action : [demande de Op1 à Op2=0, demande de Op1 à Op3=0, demande de Op1 à Op4=0, offre de Op1 à Op2= 1, offre de Op1 à Op3= 1, offre de Op1 à Op4= 1, agent-id=1]
Message de requête Req envoyé par l'entité G2 à l'entité EM: Action : [demande de Op2 à Op1=0, demande de Op2 à Op3=0, demande de Op2 à Op4=0, offre de Op2 à Op1= 0, offre de Op2 à Op3= 0, offre de Op2 à Op4= 0, agent-id=2]
Message de requête Req envoyé par l'entité G3 à l'entité EM: Action : [demande de Op3 à Op1=0, demande de Op3 à Op2=0, demande de Op3 à Op4=0, offre de Op3 à Op1= 0, offre de Op3 à Op2= 0, offre de Op3 à Op4= 0, agent-id=3]
Message de requête Req envoyé par l'entité G4 à l'entité EM: Action : [demande de Op4 à Op1=0, demande de Op4 à Op2=0, demande de Op4 à Op3=0, offre de Op4 à Op1= 0, offre de Op4 à Op2= 0, offre de Op4 à Op3= 0, agent-id=4]

Ces messages de requête indiquent que l'entité de gestion G1 offre un service de substitution aux trois autres opérateurs, via les informations présentes dans le paramètre d'interaction du message Req transmis par l'entité de gestion G1.

A la réception de ces messages de requête, l'entité de médiation EM procède lors de l'étape E7 conformément à l'étape E4 et met à jour les paramètres d'interaction des messages de notification à renvoyer aux entités de gestion en fonction des informations présentes dans les paramètres d'interaction des messages de requête Req.

Lors de l'étape E8, l'entité de médiation EM transmet de nouveaux messages de notification aux entités de gestion G1, G2, G3, G4. Ces messages ont le format suivant :
Message de notification Notif envoyé par l'entité EM à G1: Observation : [demande de Op2 à Op1=0, demande de Op3 à Op1=0, demande de Op4 à Op1=0, offre de Op2 à Op1= 0, offre de Op3 à Op1= 0, offre de Op4 à Op1= 0, onguard-Op1=1, onguard-Op2=0, onguard-Op3=0, onguard-Op4=0, blacklisted-Op1=0, blacklisted -Op2=0, blacklisted - Op3=0, blacklisted -Op4=0, rec=-1.00, fin=1]
Message de notification Notif envoyé par l'entité EM à G2: Observation : [demande de Op1 à Op2=0, demande de Op3 à Op2=0, demande de Op4 à Op2=0, offre de Op1 à Op2= 1, offre de Op3 à Op2= 0, offre de Op4 à Op2= 0, onguard-Op1=1, onguard-Op2=0, onguard-Op3=0, onguard-Op4=0, blacklisted-Op1=0, blacklisted -Op2=0, blacklisted - Op3=0, blacklisted -Op4=0, rec=0.00, fin=1]
Message de notification Notif envoyé par l'entité EM à G3: Observation : [demande de Op1 à Op3=0, demande de Op2 à Op3=0, demande de Op4 à Op3=0, offre de Op1 à Op3= 1, offre de Op2 à Op3= 0, offre de Op4 à Op3= 0, onguard-Op1=1, onguard-Op2=0, onguard-Op3=0, onguard-Op4=0, blacklisted-Op1=0, blacklisted -Op2=0, blacklisted - Op3=0, blacklisted -Op4=0, rec=0.00, fin=1]
Message de notification Notif envoyé par l'entité EM à G4: Observation : [demande de Op1 à Op4=0, demande de Op2 à Op4=0, demande de Op3 à Op4=0, offre de Op1 à Op4= 1, offre de Op2 à Op4= 0, offre de Op3 à Op4= 0, onguard-Op1=1, onguard-Op2=0, onguard-Op3=0, onguard-Op4=0, blacklisted-Op1=0, blacklisted -Op2=0, blacklisted - Op3=0, blacklisted -Op4=0, rec=0.00, fin=1]

Ces messages de notification indiquent aux entités de gestion G2, G3 et G4 que l'opérateur Op1, via son entité de gestion G1, accepte leurs demandes de substitution et l'opérateur Op1 accepte d'assurer l'acheminement des données lors de la prochaine phase de substitution.

La valeur rec de rétribution ou de récompense est positionnée à 0.00 dans les messages de notification transmis aux entités de gestion G2, G3, G4 car les opérateurs Op2, Op3 et Op4 voient leur trafic acheminer par l'opérateur Op1 alors que la valeur de rec pour l'opérateur Op1 est positionnée à -1.00 car cet opérateur assure l'acheminement pour les autres opérateurs. La valeur de rétribution à 0.00 indique que les opérateurs seront substitués par un autre opérateur et la valeur -1.00 indique que l'opérateur en question assure l'acheminement pour d'autres opérateurs. Cette valeur, indiquant un nombre de ressources économisées, pourra être avantageusement utilisé pour déterminer le prochain opérateur actif, l'opérateur ayant reçu une valeur à -1.00 ayant moins de probabilité d'être déterminé qu'un opérateur ayant reçu une valeur de 0.00.

La valeur d'état (fin) des messages de notification est positionnée à 1 indiquant que le procédé de substitution a permis de parvenir à une substitution entre les opérateurs suite à ces échanges de négociation des étapes E1 à E8.

Il est à noter que si aucun accord n'est finalisé alors qu'un nombre n configurable de messages de notification ont été transmis aux entités de gestion, alors la valeur d'état est également positionnée à 1 mais sans qu'une substitution puisse être mise en œuvre faute d'accord trouvé lors de la négociation. Dans le cas où le nombre n de messages est atteint, selon un exemple et avantageusement, l'EM renvoie non seulement fin=1 mais aussi rec=0.9 pour indiquer à l'entité de gestion Gi (ici i de 1 à 4) qu'il ne bénéficiera pas d'offre pour la prochaine substitution. Ainsi, si les Gi utilisent de l'apprentissage par renforcement, cela permet de guider leur algorithme d'apprentissage en leur montrant qu'une négociation qui a échoué leur sera couteuse en ressources car ils devront maintenir leur réseau actif sur la prochaine substitution ou le prochain cycle de substitution.

L'entité de médiation met ensuite à jour les valeurs, par exemple cumulées, des économies de ressources des différents opérateurs et l'opérateur ayant fait économiser le moins de ressources, c'est-à-dire ayant contribué de façon moindre aux phases de substitution effectivement mises en œuvre, est déterminé lors d'une étape E9 comme opérateur actif pour la prochaine phase de substitution. L'identifiant de cet opérateur déterminé comme actif sera ensuite communiqué lors d'un message d'information conformément à l'étape E1. Ainsi les opérateurs successifs déterminés sont ceux ayant le plus faiblement contribué, garantissant un procédé où les opérateurs sont incités à contribuer aux phases de substitution pour pouvoir économiser des ressources.

Selon une alternative, et une fois que la substitution a été effectuée, lors d'une étape E10 les entités de gestion (et notamment l'entité de gestion de l'opérateur actif) peuvent transmettre à une entité d'enregistrement EE les ressources effectivement consommées lors de la phase de substitution. Si les ressources sont watts-heures, le comptage des watts-heures au niveau de l'entité de médiation peut-être avantageusement mis-à-jour avec des données en provenance d'autres acteurs, par exemple une DLT (Distributed Ledger Technolgy) de l'entité d'enregistrement qui indique les watts-heures réellement utilisés pour le maintien du service et de l'infrastructure associée grâce par exemple aux informations transmises par les entités de gestion. En effet, il peut y avoir une différence entre le nombre d'heures préconfiguré sur lequel se base l'entité de médiation pour ses prévisions d'équité de roulement pour le « tour de garde » (opérateur en charge de l'acheminement) et le nombre de watts-heures consommés a posteriori. Sur base de la consommation réellement consommée par l'opérateur assumant un tour-de-garde, l'entité de médiation, via les informations sur les ressources effectivement consommées transmises par l'entité d'enregistrement lors d'une étape E11, met simplement à jour dans sa table des comptes, l'énergie totale utilisée par l'opérateur actif, ce qui lui permet d'avoir une moyenne par nuit pour chaque opérateur actif lors des phases successives de substitution, améliorant ainsi la détermination de l'opérateur actif pour la prochaine phase.

Le procédé de substitution et le procédé de détermination correspondant peuvent être mis en œuvre sur une infrastructure de réseau effective ou bien mise en œuvre lors d'une simulation pour notamment montrer à des acteurs (opérateurs, fournisseurs de services...) que le procédé leur permet d'économiser des ressources et ainsi les inciter à déployer ce type de procédé sur les infrastructures existantes.

Le procédé de substitution est d'autant plus intéressant pour chaque entité de gestion de la pluralité si toutes les entités de gestion contribuent activement au procédé et par exemple respectent leur rôle d'opérateur actif lorsqu'ils sont désignés comme tel par l'entité de médiation.

En outre, il est à noter que pour une plus grande efficacité et une convergence plus rapide de cette coopération multifournisseurs de services correspondant à une technique MARL (en anglais Multi-Agent Reinforcement Learning), il est plus avantageux que les messages (information, requête, notification) comprennent des paramètres et données codées avec des valeurs discrètes et plus précisément des flags booléens qui permettent aux entités de gestion de ne pas avoir trop de différentes valeurs à essayer lors de la phase initiale de l'apprentissage des échanges les plus optimaux, car ainsi la solution est trouvée plus rapidement.

Le procédé peut en outre s'appuyer sur des techniques connues relatives aux dilemmes sociaux tels que le « dilemme du prisonnier ». Les valeurs de rétribution peuvent en effet être utilisées comme coefficients R (Rétribution car les deux coopèrent), T (Tentation de ne pas coopérer), S (Se faire avoir car l'entité coopère mais pas l'autre), P (Punition car aucun ne coopère) d'un dilemme social qui est un dilemme du prisonnier si T > R > P > S. La condition R > (S+T)/2 est nécessaire pour que le dilemme du prisonnier, quand il est réitéré, puisse faire émerger de la coopération entre les entités de gestion. Les valeurs de rétribution peuvent donc avantageusement être utilisées dans le procédé mis en œuvre à partir d'un dilemme du prisonnier de façon que l'équilibre coopératif des entités de gestion et donc la convergence basée sur la contribution effective de chaque entité de gestion au procédé soit plus rapide.

On se réfère ensuite à la [Fig 4] qui présente un dispositif 100 de substitution selon un mode de réalisation de l'invention.

Un tel dispositif de substitution peut être mis en œuvre dans une entité de médiation, telle que l'entité EM de médiation présenté dans les [Fig 2] et [Fig 3]. Ce dispositif de substitution peut ainsi être opéré par une entité de régulation d'un service de communication, ou bien encore par un des fournisseurs de services qui peut être, selon un exemple, un opérateur de réseau sur lequel sont acheminées des données de communication relatives à un service numérique.

Par exemple, le dispositif 100 de substitution comprend une unité de traitement 130, équipée par exemple d'un microprocesseur µP, et pilotée par un programme d'ordinateur 110, stocké dans une mémoire 120 et mettant en œuvre le procédé de substitution selon l'invention. A l'initialisation, les instructions de code du programme d'ordinateur 110 sont par exemple chargées dans une mémoire RAM, avant d'être exécutées par le processeur de l'unité de traitement 130. Un tel dispositif 100 de substitution comprend :
- un émetteur 102,
- apte à émettre à destination de chaque entité de gestion un message Info d'information comprenant un identifiant du fournisseur de services actif et d'un paramètre d'interaction entre chaque fournisseur de services de la pluralité, et,
- apte à émettre tant qu'une valeur d'état reçue n'indique pas une fin de négociation à destination de chaque entité de gestion un message Notif de notification comprenant un identifiant du fournisseur de services actif déterminé, le paramètre d'interaction entre chacun des fournisseurs de services mis à jour en fonction des messages de requêtes reçus, une valeur de rétribution du fournisseur de services destinataire du message de notification et la valeur d'état mise à jour en fonction du paramètre d'interaction du message de notification.
- un récepteur 101, apte à recevoir tant que la valeur d'état reçue n'indique pas une fin de négociation, en provenance de chaque entité de gestion un message Req de requête comprenant un identifiant du fournisseur de services dont l'entité de gestion émet le message et le paramètre d'interaction mis à jour en fonction du message d'information ou du message de notification reçu,
- un calculateur 103, apte à mettre à jour la valeur d'état en fonction du paramètre d'interaction du message de notification.

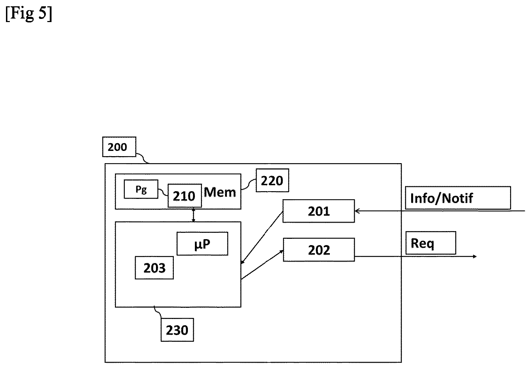

On se réfère ensuite à la [Fig 5] qui présente un dispositif 200 de détermination selon un mode de réalisation de l'invention.

Un tel dispositif de détermination peut être mis en œuvre dans une entité de gestion, telle que l'entité G1, G2, G3, G4 de gestion présentée dans les [Fig 2] et [Fig 3]. Ce dispositif de substitution peut ainsi être opéré par un fournisseur de services tel qu'un opérateur et peut par exemple être instancié dans une entité d'administration d'un réseau d'opérateur ou d'un service de communication.

Par exemple, le dispositif 200 de détermination comprend une unité de traitement 230, équipée par exemple d'un microprocesseur uP, et pilotée par un programme d'ordinateur 210, stocké dans une mémoire 220 et mettant en œuvre le procédé de détermination selon l'invention. A l'initialisation, les instructions de code du programme d'ordinateur 210 sont par exemple chargées dans une mémoire RAM, avant d'être exécutées par le processeur de l'unité de traitement 230. Un tel dispositif 200 de détermination comprend
- un récepteur 201,
- apte à recevoir en provenance de l'entité de médiation d'un message Info d'information comprenant un identifiant du fournisseur de services actif et d'un paramètre d'interaction entre chaque fournisseur de services de la pluralité, et tant qu'une valeur d'état reçue n'indique pas une fin de négociation
- apte à recevoir en provenance de l'entité de médiation au moins un message Notif de notification comprenant un identifiant du fournisseur de services actif déterminé, le paramètre d'interaction entre chacun des fournisseurs de services mis à jour en fonction des messages de requêtes reçus, une valeur de rétribution du fournisseur de services destinataire du message de notification et la valeur d'état mise à jour en fonction du paramètre d'interaction du message de notification.
- un calculateur 203, apte à mettre à jour le paramètre d'interaction en fonction du message d'information ou du message de notification reçu,
- un émetteur 202, apte à émettre à destination de l'entité de médiation au moins un message Req de requête comprenant un identifiant du fournisseur de services dont l'entité de gestion émet le message et le paramètre d'interaction mis à jour.

## Revendications

1. Procédé de substitution d'une pluralité de fournisseurs de services (Op1, Op2, Op3,Op4) par un des fournisseur de services (Op1) de la pluralité, dit fournisseur de services actif, assurant l'acheminement de données en lieu et place de la pluralité de fournisseurs de services pendant une durée déterminée dite cycle temporel, le procédé étant mis en œuvre dans une entité de médiation (EM) apte à communiquer avec une entité de gestion (G1, G2, G3, G4) mise en œuvre par chaque fournisseur de services de la pluralité et comprenant :
- une émission (E2) à destination de chaque entité de gestion (G1, G2, G3, G4) d'un message d'information (Info) comprenant un identifiant du fournisseur de services (Op1) actif et d'un paramètre d'interaction entre chacun des fournisseurs de services (Op1, Op2, Op3, Op4) de la pluralité, l'identifiant du fournisseur de services actif étant déterminé au moyen d'une valeur de rétribution indiquant sa moindre contribution à l'acheminement de données lors de cycles temporels précédents, et tant qu'une valeur binaire d'état est positionnée par l'entité de médiation pour indiquer une négociation en cours entre les fournisseurs de service pour la mise en œuvre de la substitution,
- au moins une réception (E3, E6) en provenance de chaque entité de gestion (G1, G2, G3, G4) d'un message de requête (Req) de substitution comprenant un identifiant du fournisseur de services dont l'entité de gestion émet le message et le paramètre d'interaction mis à jour indiquant les demandes et les offres de substitution des fournisseurs de services (Op1, Op2, Op3, Op4) reçues dans le message d'information (Info) ou le message de notification (Notif),
- au moins une émission (E5, E8) à destination de chaque entité de gestion (G1, G2, G3, G4) d'un message de notification (Notif) comprenant un identifiant du fournisseur de services actif déterminé (Op1), le paramètre d'interaction entre chacun des fournisseurs de services (Op1, Op2, Op3, Op4) configuré par l'entité de médiation (E4) pour indiquer aux fournisseurs de services les demandes et les offres de substitution reçus dans les messages de requête, la valeur de rétribution du fournisseur de services (Op1, Op2, Op3, Op4) destinataire du message de notification (Notif) indiquant une métrique associée à des ressources utilisées ou économisées pour l'acheminement des données par ledit fournisseur de services lors du cycle temporel, et la valeur binaire d'état positionnée à une valeur indiquant une fin de négociation dans le cas où le fournisseur de services actif (Op1) déterminé a émis un message de requête comprenant un paramètre d'interaction indiquant une offre de substitution de la pluralité pour le cycle temporel.

2. Procédé de substitution, selon la revendication 1, dans lequel le paramètre d'interaction entre chacun des fournisseurs de services de la pluralité (Op1, Op2, Op3 et Op4) comprend
- un paramètre de demande de substitution d'un fournisseur de services (Op1) de la pluralité à chacun des autres fournisseurs de services (Op2, Op3 et Op4) de la pluralité,
- un paramètre d'offre de substitution d'un fournisseur de services (Op1) de la pluralité à chacun des autres fournisseurs de services (Op2, Op3, Op4) de la pluralité.

3. Procédé de substitution, selon la revendication 1 ou la revendication 2, dans lequel la mise à jour du paramètre d'interaction comprend la configuration dans le message de notification émis à destination de l'entité de gestion (G1) du fournisseur de services actif (Op1) des demandes de substitution reçues dans les messages de requête (Req) émis par les fournisseurs de services non actifs (Op2, Op3, Op4) de la pluralité.

4. Procédé de substitution, selon l'une des revendications 1 à 3, dans lequel le paramètre d'interaction mis à jour du message de requête comprend en outre une donnée relative à la technologie d'un réseau de communication du fournisseur de services ((Op1, Op2, Op3, Op4) dont l'entité de gestion (G1, G2, G3, G4) émet le message de requête (Req).

5. Procédé de substitution, selon l'une des revendications 1 à 4, dans lequel le message de notification (Notif) comprend en outre une information indiquant si le fournisseur de services (Op1, Op2, Op3, Op4) dont l'entité de gestion (G1, G2, G3, G4) reçoit le message de notification est retiré de la pluralité (Op1, Op2, Op3, Op4) dans la mise en œuvre du procédé de substitution.

6. Procédé de substitution, selon l'une des revendications 1 à 5, dans lequel le message de notification (Notif) comprend en outre une donnée relative à la consommation de ressources économisée par la substitution des fournisseurs de services (Op1, Op2, Op3 et Op4) de la pluralité par le fournisseur de services actif (Op1).

7. Procédé de substitution, selon l'une des revendications 1 à 6, dans lequel la valeur d'état est positionnée pour indiquer qu'un des fournisseurs de services de la pluralité est en position d'assurer l'acheminement des données en lieu et place des fournisseurs de services de la pluralité si le paramètre d'interaction du message de requête (Req) émis par le fournisseur de services actif (Op1) comprend un paramètre d'offre de substitution ou si le nombre de messages de requête (Req) et/ou de notification (Notif) atteint une valeur prédéterminée.

8. Procédé de substitution, selon l'une des revendications 1 à 7, dans lequel la valeur de rétribution est relative à l'économie de ressources générée par le fournisseur de services destinataire (Op1, Op2, Op3, Op4).

9. Procédé de substitution, selon l'une des revendications 1 à 8, dans lequel un nouveau fournisseur de services actif (Op2) est en outre déterminé en fonction des valeurs de rétribution émises et/ou en fonction d'une ressource consommée par le fournisseur de services actif (Op1) pour l'acheminement des données de communication en substitution aux fournisseurs de services (Op1, Op2, Op3, Op4) de la pluralité.

10. Procédé de détermination d'un fournisseur de services actif (Op1) parmi une pluralité de fournisseurs de services (Op1, Op2, Op3 et Op4), ledit fournisseur de services actif (Op1) assurant l'acheminement de données en lieu et place de la pluralité de fournisseurs de services pendant une durée déterminée dite cycle temporel, le procédé étant mis en œuvre par une entité de gestion (G1, G2, G3, G4) de chaque fournisseur de services de la pluralité (Op1, Op2, Op3, Op4) apte à communiquer avec une entité de médiation (EM) et comprenant :
- une réception (E2) en provenance de l'entité de médiation (EM) d'un message d'information comprenant un identifiant du fournisseur de services actif (Op1) et d'un paramètre d'interaction entre chacun des fournisseurs de services (Op1, Op2, Op3, Op4) de la pluralité, l'identifiant du fournisseur de services actif étant déterminé au moyen d'une valeur de rétribution indiquant sa moindre contribution à l'acheminement de données lors de cycles temporels précédents, et tant qu'une valeur binaire d'état est positionnée par l'entité de médiation pour indiquer une négociation en cours entre les fournisseurs de service pour la mise en œuvre de la substitution,
- au moins une mise à jour du paramètre d'interaction indiquant les demandes et les offres de substitution des fournisseurs de services (Op1, Op2, Op3, Op4),
- au moins une émission (E3, E6) à destination de l'entité de médiation (EM) d'un message de requête (Req) de substitution comprenant un identifiant du fournisseur de services (Op1, Op2, Op3, Op4) dont l'entité de gestion (G1, G2, G3, G4) émet le message et le paramètre d'interaction mis à jour,
- au moins une réception (E5, E8) en provenance de l'entité de médiation (EM) d'un message de notification (Notif) comprenant un identifiant du fournisseur de services actif (Op1) déterminé, , le paramètre d'interaction entre chacun des fournisseurs de services (Op1, Op2, Op3, Op4) configuré par l'entité de médiation (E4) pour indiquer aux fournisseurs de services les demandes et les offres de substitution reçues dans les messages de requête, la valeur de rétribution du fournisseur de services (Op1, Op2, Op3, Op4) destinataire du message de notification (Notif) indiquant une métrique associée à des ressources utilisées ou économisées pour l'acheminement des données par ledit fournisseur de services à l'acheminement des données lors du cycle temporel et la valeur binaire d'état positionné à une valeur indiquant une fin de négociation dans le cas où le fournisseur de services actif (Op1) déterminé a émis un message de requête comprenant un paramètre d'interaction indiquant une offre de substitution de la pluralité pour le cycle temporel .

11. Procédé de détermination, selon la revendication 10, où la mise à jour du paramètre d'interaction dans les messages de requête comprend la mise à jour d'un paramètre de demande de substitution d'un fournisseur de services non - actif (Op2, Op3, Op4) de la pluralité au fournisseur de services actif (Op1) en fonction de l'identifiant du fournisseur de services actif (Op1) reçu dans le message de notification (Notif) ou à l'offre de substitution par le fournisseur de services actif (Op1) aux fournisseurs de services non-actifs (Op2, Op3, Op4) en fonction des paramètres de demande reçus dans les messages de notification (Notif).

12. Procédé de détermination, selon la revendication 10 ou la revendication 11, comprenant en outre l'émission par l'entité de gestion (G1) du fournisseur de services actif (Op1) à destination d'une entité d'enregistrement (EE) d'une ressource consommée pour acheminer les données de communication en substitution aux fournisseurs de services (Op1, Op2, Op3, Op4) de la pluralité.

13. Dispositif (100) de substitution d'une pluralité de fournisseurs de services (Op1, Op2, Op3, Op4) par un des fournisseurs de services (Op1) de la pluralité, dit fournisseur de services actif, assurant l'acheminement de données en lieu et place de la pluralité de fournisseurs de services pendant une durée déterminée dite cycle temporel, le dispositif étant mis en œuvre dans une entité de médiation (EM) apte à communiquer avec une entité de gestion (G1, G2, G3, G4) mise en œuvre par chaque fournisseur de services (Op1, Op2, Op3, Op4) de la pluralité et comprenant
- un émetteur (102),
- apte à émettre à destination de chaque entité de gestion (G1, G2, G3, G4) un message d'information (Info) comprenant un identifiant du fournisseur de services actif (Op1) et d'un paramètre d'interaction entre chacun des fournisseurs de services (Op1, Op2, Op3, Op4) de la pluralité, l'identifiant du fournisseur de services actif étant déterminé au moyen d'une valeur de rétribution indiquant sa moindre contribution à l'acheminement de données lors de cycles temporels précédents, et,
- apte à émettre tant qu'une valeur binaire d'état reçue est positionnée par l'entité de médiation pour indiquer une négociation en cours entre les fournisseurs de service pour la mise en œuvre de la substitution, à destination de chaque entité de gestion (G1, G2, G3, G4) un message de notification (Notif) comprenant un identifiant du fournisseur de services actif déterminé (Op1), le paramètre d'interaction entre chacun des fournisseurs de services (Op1, Op2, Op3, Op4) configuré par l'entité de médiation (E4) pour indiquer aux fournisseurs de services les demandes et les offres de substitution reçues dans les messages de requête, la valeur de rétribution du fournisseur de services (Op1, Op2, Op3, Op4) destinataire du message de notification (Notif) indiquant la une métrique associée à des ressources utilisées ou économisées pour l'acheminement des données par ledit fournisseur de services lors du cycle temporel et la valeur binaire positionné à une valeur indiquant une fin de négociation dans le cas où l'opérateur actif (Op1) déterminé a émis un message de requête comprenant un paramètre d'interaction indiquant une offre de substitution de la pluralité pour le cycle temporel,
- un récepteur (101), apte à recevoir, en provenance de chaque entité de gestion (G1, G2, G3, G4) un message de requête (Req) de substitution comprenant un identifiant du fournisseur de services (Op1, Op2, Op3, Op4) dont l'entité de gestion (Op1, Op2, Op3, Op4) émet le message et le paramètre d'interaction mis à jour indiquant les demandes et les offres de substitution des fournisseurs de services (Op1, Op2, Op3, Op4) ,
- un calculateur (103), apte à mettre à jour la valeur d'état pour indiquer les demandes et les offres de substitution reçues dans les messages de requête.

14. Dispositif (200) de détermination d'un fournisseur de services actif (Op1) parmi une pluralité de fournisseurs de services (Op1, Op2, Op3, Op4), ledit fournisseur de services actif (Op1) assurant l'acheminement de données en lieu et place de la pluralité de fournisseurs de services pendant une durée déterminée dite cycle temporel , le dispositif étant mis en œuvre dans une entité de gestion (G1, G2, G3, G4) de chaque fournisseur de services (Op1, Op2, Op3, Op4) de la pluralité apte à communiquer avec une entité de médiation (EM) et comprenant :
- un récepteur (201),
- apte à recevoir en provenance de l'entité de médiation (EM) un message d'information (Info) comprenant un identifiant du fournisseur de services actif (Op1) et un paramètre d'interaction entre chacun des fournisseurs de services (Op1, Op2, Op3, Op4) de la pluralité, l'identifiant du fournisseur de services actif étant déterminé au moyen d'une valeur de rétribution indiquant sa moindre contribution à l'acheminement de données lors de cycles temporels précédents, et tant qu'une valeur binaire d'état reçue est positionnée par l'entité de médiation pour indiquer une négociation en cours entre les fournisseurs de service pour la mise en œuvre de la substitution,
- apte à recevoir en provenance de l'entité de médiation (EM) au moins un message de notification (Notif) comprenant un identifiant du fournisseur de services actif (Op1) déterminé, le paramètre d'interaction entre chacun des fournisseurs de services (Op1, Op2, Op3, Op4) configuré par l'entité de médiation (E4) pour indiquer les demandes et les offres de substitution reçues dans les messages de requête, la valeur de rétribution du fournisseur de services (Op1, Op2, Op3, Op4) destinataire du message de notification (Notif) indiquant une métrique associée à des ressources utilisées ou économisées pour l'acheminement des données par ledit fournisseur de services à l'acheminement des données lors du cycle temporel et la valeur binaire d'état positionnée à une valeur indiquant une fin de négociation dans le cas où l'opérateur actif (Op1) déterminé a émis un message de requête comprenant un paramètre d'interaction indiquant une offre de substitution de la pluralité pour le cycle temporel ,
- un calculateur (203), apte à mettre à jour le paramètre d'interaction indiquant les demandes et les offres de substitution des fournisseurs de services (Op1, Op2, Op3, Op4) reçues dans le message d'information (Info) ou le message de notification (Notif),
- un émetteur (202), apte à émettre à destination de l'entité de médiation (EM) au moins un message de requête (Req) de substitution comprenant un identifiant du fournisseur de services (Op1, Op2, Op3, Op4) dont l'entité de gestion (G1, G2, G3, G4) émet le message de requête (Req) et le paramètre d'interaction mis à jour.

15. Système de substitution d'une pluralité de fournisseurs de services par un fournisseur de services, dit fournisseur de services actif, de la pluralité pour l'acheminement de données de communication, ledit système comprenant :
- Une entité de médiation (EM) comprenant un dispositif de substitution (100) selon la revendication 13,
- Au moins deux fournisseurs de services ((Op1, Op2, Op3, Op4) comprenant chacun une entité de gestion (G1, G2, G3, G4) comprenant un dispositif de détermination (200) selon la revendication 14.

16. Programme d'ordinateur comportant des instructions pour la mise en œuvre du procédé de substitution selon l'une quelconque des revendications 1 à 9, lorsque le programme est exécuté par un processeur.

## Patentansprüche

1. Verfahren zum Ersetzen einer Vielzahl von Dienstanbietern (Op1, Op2, Op3, Op4) durch einen der Dienstanbieter (Op1) der Vielzahl, den sogenannten aktiven Dienstanbieter, der die Weiterleitung von Daten anstelle der Vielzahl von Dienstanbietern während einer bestimmten Dauer, dem sogenannten Zeitzyklus, sicherstellt, wobei das Verfahren in einer Vermittlungsentität (EM) implementiert ist, die mit einer Verwaltungsentität (G1, G2, G3, G4) kommunizieren kann, die von jedem der Dienstanbieter der Vielzahl implementiert ist und Folgendes aufweist:
- eine Sendung (E2) einer Informationsnachricht (Info) an jede Verwaltungsentität (G1, G2, G3, G4), die eine Kennung des aktiven Dienstanbieters (Op1) und einen Parameter zur Interaktion zwischen jedem der Dienstanbieter (Op1, Op2, Op3, Op4) der Vielzahl enthält, wobei die Kennung des aktiven Dienstanbieters anhand eines Vergütungswerts bestimmt wird, der seinen geringsten Beitrag zur Weiterleitung von Daten in früheren Zeitzyklen angibt, und solange ein binärer Statuswert von der Vermittlungsentität gesetzt wird, um eine laufende Verhandlung zwischen den Dienstanbietern zur Durchführung des Ersetzens anzuzeigen,
- mindestens einen Empfang (E3, E6) einer Anforderungsnachricht (Req) zum Ersetzen von jeder Verwaltungsentität (G1, G2, G3, G4), die eine Kennung des Dienstanbieters enthält, dessen Verwaltungsentität die Nachricht und den aktualisierten Parameter zur Interaktion sendet, der die Anfragen und Angebote zum Ersetzen der Dienstanbieter (Op1, Op2, Op3, Op4) angibt, die in der Informationsnachricht (Info) oder Benachrichtigungsnachricht (Notif) empfangen wurden,
- mindestens eine Sendung (E5, E8) einer Benachrichtigungsnachricht (Notif) an jede Verwaltungsentität (G1, G2, G3, G4), die eine Kennung des bestimmten aktiven Dienstanbieters (Op1) enthält, den Parameter zur Interaktion zwischen jedem der Dienstanbieter (Op1, Op2, Op3, Op4), der von der Vermittlungsentität (E4) konfiguriert wurde, um den Dienstanbietern die in den Anforderungsnachrichten empfangenen Anfragen und Angebote zum Ersetzen anzugeben, den Vergütungswert des die Benachrichtigungsnachricht (Notif) empfangenden Dienstanbieters (Op1, Op2, Op3, Op4) ist, der eine Metrik angibt, die mit den Ressourcen verbunden ist, die für die Weiterleitung der Daten durch den Dienstanbieter während des Zeitzyklus verwendet oder eingespart wurden, und den Status-Binärwert, der auf einen Wert gesetzt ist, der ein Verhandlungsende anzeigt, falls der bestimmte aktive Dienstanbieter (Op1) eine Anforderungsnachricht gesendet hat, die einen Parameter zur Interaktion enthält, der ein Angebot zum Ersetzen der Vielzahl für den Zeitzyklus angibt.

2. Verfahren zum Ersetzen nach Anspruch 1, wobei der Parameter zur Interaktion zwischen jedem der Dienstanbieter (Op1, Op2, Op3, Op4) der Vielzahl Folgendes aufweist:
- einen Parameter zur Anfrage des Ersetzens eines Dienstanbieters (Op1) der Vielzahl an jeden der anderen Dienstanbieter (Op2, Op3 und Op4) der Vielzahl.
- einen Parameter zum Angebot des Ersetzens eines Dienstanbieters (Op1) der Vielzahl an jeden der anderen Dienstanbieter (Op2, Op3 und Op4) der Vielzahl.

3. Verfahren zum Ersetzen nach Anspruch 1 oder Anspruch 2, wobei das Aktualisieren des Parameters zur Interaktion in der Benachrichtigungsnachricht, die an die Verwaltungsentität (G1) des aktiven Dienstanbieters (Op1) gesendet wird, das Konfigurieren von Anfragen zum Ersetzen enthält, die in den Anforderungsnachrichten (Req) empfangen werden, die von den nicht aktiven Dienstanbietern (Op2, Op3, Op4) der Vielzahl gesendet werden.

4. Verfahren zum Ersetzen nach einem der Ansprüche 1 bis 3, wobei der aktualisierte Parameter zur Interaktion der Anforderungsnachricht darüber hinaus Daten enthält, die sich auf die Technologie eines Kommunikationsnetzwerks des Dienstanbieters (Op1, Op2, Op3, Op4) beziehen, dessen Verwaltungsentität (G1, G2, G3, G4) die Anforderungsnachricht (Req) sendet.

5. Verfahren zum Ersetzen nach einem der Ansprüche 1 bis 4, wobei die Benachrichtigungsnachricht (Notif) darüber hinaus eine Information enthält, die angibt, ob der Dienstanbieter (Op1, Op2, Op3, Op4), dessen Verwaltungsentität (G1, G2, G3, G4) die Benachrichtigungsnachricht empfängt, bei der Durchführung des Ersetzens aus der Vielzahl (Op1, Op2, Op3, Op4) entfernt wird.

6. Verfahren zum Ersetzen nach einem der Ansprüche 1 bis 5, wobei die Benachrichtigungsnachricht (Notif) darüber hinaus Daten zum Ressourcenverbrauch enthält, der durch das Ersetzen der Dienstanbieter (Op1, Op2, Op3 und Op4) der Vielzahl durch den aktiven Dienstanbieter (Op1) eingespart wurde.

7. Verfahren zum Ersetzen nach einem der Ansprüche 1 bis 6, wobei der Statuswert so gesetzt wird, dass er anzeigt, dass einer der Dienstanbieter der Vielzahl in der Lage ist, die Weiterleitung der Daten anstelle der Dienstanbieter der Vielzahl sicherzustellen, wenn der Parameter zur Interaktion der Anforderungsnachricht (Req) des aktiven Dienstanbieters (Op1) einen Parameter zum Angebots des Ersetzens enthält oder wenn die Anzahl der Anforderungsnachrichten (Req) und/oder Benachrichtigungsnachrichten (Notif) einen vorbestimmten Wert erreicht.

8. Verfahren zum Ersetzen nach einem der Ansprüche 1 bis 7, wobei der Vergütungswert sich auf die vom empfangenden Dienstleister (Op1, Op2, Op3, Op4) erzielte Ressourceneinsparung bezieht.

9. Verfahren zum Ersetzen nach einem der Ansprüche 1 bis 8, wobei zusätzlich ein neuer aktiver Dienstanbieter (Op2) in Abhängigkeit von den ausgegebenen Vergütungswerten und/oder in Abhängigkeit von einer vom aktiven Dienstanbieter (Op1) für die Weiterleitung der Kommunikationsdaten verbrauchten Ressource als Ersatz für die Dienstanbieter (Op1, Op2, Op3, Op4) der Vielzahl bestimmt wird.

10. Verfahren zum Bestimmen eines aktiven Dienstanbieters (Op1) aus einer Vielzahl von Dienstanbietern (Op1, Op2, Op3 und Op4), wobei der aktive Dienstanbieter (Op1) die Weiterleitung von Daten anstelle der Vielzahl von Dienstanbietern während einer bestimmten Dauer, dem sogenannten Zeitzyklus, sicherstellt, wobei das Verfahren von einer Verwaltungsentität (G1, G2, G3, G4) jedes Dienstanbieters der Vielzahl (Op1, Op2, Op3, Op4) durchgeführt wird, die in der Lage ist, mit einer Vermittlungsentität (EM) zu kommunizieren, und Folgendes aufweist:
- einen Empfang (E2) einer Informationsnachricht von der Vermittlungsentität (EM), die eine Kennung des aktiven Dienstanbieters (Op1) und einen Parameter zur Interaktion zwischen jedem der Dienstanbieter (Op1, Op2, Op3, Op4) der Vielzahl enthält, wobei die Kennung des aktiven Dienstanbieters anhand eines Vergütungswerts bestimmt wird, der seinen geringsten Beitrag zur Datenübertragung in früheren Zeitzyklen angibt, und solange ein binärer Statuswert von der Vermittlungsentität gesetzt wird, um eine laufende Verhandlung zwischen den Dienstanbietern zur Durchführung des Ersetzens anzuzeigen,
- mindestens eine Aktualisierung des Parameter zur Interaktion, der die Anfragen und Angebote zum Ersetzen der Dienstanbieter (Op1, Op2, Op3, Op4) angibt,
- mindestens eine Sendung (E3, E6) einer Anforderungsnachricht (Req) zum Ersetzen an die Vermittlungsentität (EM), die eine Kennung des Dienstanbieters (Op1, Op2, Op3, Op4) enthält, dessen Verwaltungsentität (G1, G2, G3, G4) die Nachricht und den aktualisierten Parameter zur Interaktion sendet,
- mindestens einen Empfang (E5, E8) einer Benachrichtigungsnachricht (Notif) von der Vermittlungsentität (EM), die eine Kennung des bestimmten aktiven Dienstanbieters (Op1) enthält, den Parameter zur Interaktion zwischen jedem der Dienstanbieter (Op1, Op2, Op3, Op4), der von der Vermittlungsentität (E4) konfiguriert wurde, um den Dienstanbietern die in den Anforderungsnachrichten empfangenen Anfragen und Angebote zum Ersetzen anzugeben, den Vergütungswert des Dienstanbieters (Op1, Op2, Op3, Op4), der Empfänger der Benachrichtigungsnachricht (Notif) ist, der eine Metrik angibt, die mit den Ressourcen verbunden ist, die für die Weiterleitung der Daten durch den Dienstanbieter bei der Weiterleitung der Daten während des Zeitzyklus verwendet oder eingespart wurden, und den Status-Binärwert, der auf einen Wert gesetzt ist, der ein Verhandlungsende anzeigt, falls der bestimmte aktive Dienstanbieter (Op1) eine Anforderungsnachricht gesendet hat, die einen Parameter zur Interaktion enthält, der ein Angebot zum Ersetzen der Vielzahl für den Zeitzyklus angibt.

11. Verfahren zum Bestimmen nach Anspruch 10, wobei das Aktualisieren des Parameters zur Interaktion in den Anforderungsnachrichten das Aktualisieren eines Anfrageparameters zum Ersetzen eines nicht aktiven Dienstanbieters (Op2, Op3, Op4) der Vielzahl an den aktiven Dienstanbieter (Op1) basierend auf der Kennung des aktiven Dienstanbieters (Op1) enthält, die in der Benachrichtigungsnachricht (Notif) empfangen wurde, oder das Angebot zum Ersetzen durch den aktiven Dienstanbieter (Op1) an die inaktiven Dienstanbieter (Op2, Op3, Op4) basierend auf den Anforderungsparametern, die in den Benachrichtigungsnachrichten empfangen wurden (Notif).

12. Verfahren zum Bestimmen nach Anspruch 10 oder Anspruch 11, das darüber hinaus das Senden einer Ressource durch die Verwaltungsentität (G1) des aktiven Dienstanbieters (Op1) an eine Registrierungsentität (EE) aufweist, die zur Weiterleitung der Kommunikationsdaten als Ersatz für die Dienstanbieter (Op1, Op2, Op3, Op4) der Vielzahl verbraucht wurde.

13. Vorrichtung (100) zum Ersetzen einer Vielzahl von Dienstanbietern (Op1, Op2, Op3, Op4) durch einen der Dienstanbieter (Op1) der Vielzahl, den sogenannten aktiven Dienstanbieter, der die Weiterleitung von Daten anstelle der Vielzahl von Dienstanbietern während einer bestimmten Dauer, dem sogenannten Zeitzyklus, sicherstellt, wobei die Vorrichtung in einer Vermittlungsentität (EM) implementiert ist, die mit einer Verwaltungsentität (G1, G2, G3, G4) kommunizieren kann, die von jedem Dienstanbieter (Op1, Op2, Op3, Op4) der Vielzahl implementiert ist und Folgendes aufweist:
- einen Sender (102),
- der in der Lage ist, eine Informationsnachricht (Info) an jede Verwaltungsentität (G1, G2, G3, G4) zu senden, die eine Kennung des aktiven Dienstanbieters (Op1) und einen Parameter zur Interaktion zwischen jedem der Dienstanbieter (Op1, Op2, Op3, Op4) der Vielzahl enthält, wobei die Kennung des aktiven Dienstanbieters anhand eines Vergütungswerts bestimmt wird, der seinen geringsten Beitrag zur Weiterleitung von Daten in früheren Zeitzyklen angibt, und
- in der Lage ist, solange ein binärer Statuswert von der Vermittlungsentität gesetzt wird, um eine laufende Verhandlung zwischen den Dienstanbietern zur Durchführung des Ersetzens anzuzeigen, eine Benachrichtigungsnachricht (Notif) an jede Verwaltungsentität (G1, G2, G3, G4) zu senden, die eine Kennung des bestimmten aktiven Dienstanbieters (Op1) enthält, den Parameter zur Interaktion zwischen jedem der Dienstanbieter (Op1, Op2, Op3, Op4), der von der Vermittlungsentität (E4) konfiguriert wurde, um den Dienstanbietern die in den Anforderungsnachrichten empfangenen Anfragen und Angebote zum Ersetzen anzugeben, den Vergütungswert des die Benachrichtigungsnachricht (Notif) empfangenden Dienstanbieters (Op1, Op2, Op3, Op4) ist, der eine Metrik angibt, die mit den Ressourcen verbunden ist, die für die Weiterleitung der Daten durch den Dienstanbieter während des Zeitzyklus verwendet oder eingespart wurden, und den Binärwert, der auf einen Wert gesetzt ist, der ein Verhandlungsende anzeigt, falls der bestimmte aktive Dienstanbieter (Op1) eine Anforderungsnachricht gesendet hat, die einen Parameter zur Interaktion enthält, der ein Angebot zum Ersetzen der Vielzahl für den Zeitzyklus angibt,
- einen Empfänger (101), der in der Lage ist, eine Anforderungsnachricht (Req) zum Ersetzen von jeder Verwaltungsentität (G1, G2, G3, G4) zu empfangen, die eine Kennung des Dienstanbieters (Op1, Op2, Op3, Op4) enthält, dessen Verwaltungsentität (Op1, Op2, Op3, Op4) die Nachricht und den aktualisierten Parameter zur Interaktion sendet, der die Anfragen und Angebote zum Ersetzen der Dienstanbieter (Op1, Op2, Op3, Op4) angibt,
- einen Rechner (103), der in der Lage ist, den Statuswert zu aktualisieren, um die in den Anforderungsnachrichten empfangenen Anfragen und Angebote zum Ersetzen anzuzeigen.

14. Vorrichtung (200) zum Bestimmen eines aktiven Dienstanbieters (Op1) aus einer Vielzahl von Dienstanbietern (Op1, Op2, Op3, Op4), wobei der aktive Dienstanbieter (Op1) die Weiterleitung von Daten anstelle der Vielzahl von Dienstanbietern während einer bestimmten Dauer, dem sogenannten Zeitzyklus, sicherstellt, wobei die Vorrichtung in einer Verwaltungsentität (G1, G2, G3, G4) jedes Dienstanbieters (Op1, Op2, Op3, Op4) der Vielzahl implementiert ist, die in der Lage ist, mit einer Vermittlungsentität (EM) zu kommunizieren, und Folgendes aufweist:
- einen Empfänger (201),
- der in der Lage ist, eine Informationsnachricht (Info) von der Vermittlungsentität (EM) zu empfangen, die eine Kennung des aktiven Dienstanbieters (Op1) und einen Parameter zur Interaktion zwischen jedem der Dienstanbieter (Op1, Op2, Op3, Op4) der Vielzahl enthält, wobei die Kennung des aktiven Dienstanbieters anhand eines Vergütungswerts bestimmt wird, der seinen geringsten Beitrag zur Datenübertragung in früheren Zeitzyklen angibt, und solange ein binärer Statuswert von der Vermittlungsentität gesetzt wird, um eine laufende Verhandlung zwischen den Dienstanbietern zur Durchführung des Ersetzens anzuzeigen,
- und in der Lage ist, mindestens eine Benachrichtigungsnachricht (Notif) von der Vermittlungsentität (EM) zu empfangen, die eine Kennung des bestimmten aktiven Dienstanbieters (Op1) enthält, den Parameter zur Interaktion zwischen jedem der Dienstanbieter (Op1, Op2, Op3, Op4), der von der Vermittlungsentität (E4) konfiguriert wurde, um die in den Anforderungsnachrichten empfangenen Anfragen und Angebote zum Ersetzen anzugeben, den Vergütungswert des Dienstanbieters (Op1, Op2, Op3, Op4), der Empfänger der Benachrichtigungsnachricht (Notif) ist, der eine Metrik angibt, die mit den Ressourcen verbunden ist, die für die Weiterleitung der Daten durch den Dienstanbieter bei der Weiterleitung der Daten während des Zeitzyklus verwendet oder eingespart wurden, und den Status-Binärwert, der auf einen Wert gesetzt ist, der ein Verhandlungsende anzeigt, falls der bestimmte aktive Dienstanbieter (Op1) eine Anforderungsnachricht gesendet hat, die einen Parameter zur Interaktion enthält, der ein Angebot zum Ersetzen der Vielzahl für den Zeitzyklus angibt,
- einen Rechner (203), der in der Lage ist, den Parameter zur Interaktion zu aktualisieren, der die in der Informationsnachricht (Info) oder Benachrichtigungsnachricht (Notif) empfangenen Anfragen und Angebote zum Ersetzen der Dienstanbieter (Op1, Op2, Op3, Op4) angibt,
- einen Sender (202), der in der Lage ist, mindestens eine Anforderungsnachricht (Req) zum Ersetzen an die Vermittlungsentität (EM) zu senden, die eine Kennung des Dienstanbieters (Op1, Op2, Op3, Op4) enthält, dessen Verwaltungsentität (G1, G2, G3, G4) die Anforderungsnachricht (Req) und den aktualisierten Parameter zur Interaktion sendet.

15. System zum Ersetzen einer Vielzahl von Dienstanbietern durch einen Dienstanbieter der Vielzahl, den sogenannten aktiven Dienstanbieter, zur Weiterleitung von Kommunikationsdaten, wobei das System Folgendes aufweist:
- eine Vermittlungsentität (EM) mit einer Vorrichtung zum Ersetzen (100) nach Anspruch 13,
- mindestens zwei Dienstanbieter (Op1, Op2, Op3, Op4), die jeweils eine Verwaltungsentität (G1, G2, G3, G4) mit einer Vorrichtung zum Bestimmen (200) nach Anspruch 14 aufweisen.

16. Computerprogramm mit Anweisungen zur Durchführung des Verfahrens zum Ersetzen nach einem der Ansprüche 1 bis 9, wenn das Programm von einem Prozessor ausgeführt wird.

## Claims

1. Method for substituting a plurality of service providers (Op1, Op2, Op3, Op4) with one of the service providers (Op1) of the plurality of service providers, called active service provider, which routes data instead of the plurality of service providers for a determined duration, called temporal cycle, the method being implemented in a mediation entity (EM) able to communicate with a management entity (G1, G2, G3, G4) implemented by each service provider of the plurality of service providers and comprising:
- sending (E2) each management entity (G1, G2, G3, G4) an information message (Info) comprising an identifier of the active service provider (Op1) and an interaction parameter between each of the service providers (Op1, Op2, Op3, Op4) of the plurality of service providers, the identifier of the active service provider being determined by means of a remuneration value indicating its least contribution to data routing in previous temporal cycles, and as long as a binary state value is set by the mediation entity to indicate negotiation is in progress between the service providers with a view to implementing substitution,
- at least one reception step (E3, E6) for receiving a substitution request message (Req) from each management entity (G1, G2, G3, G4) comprising an identifier of the service provider whose management entity sends the message and the updated interaction parameter indicating the substitution requests and offers of the service providers (Op1, Op2, Op3, Op4) received in the information message (Info) or the notification message (Notif),
- at least one sending step (E5, E8) for sending each management entity (G1, G2, G3, G4) a notification message (Notif) comprising an identifier of the determined active service provider (Op1), the interaction parameter between each of the service providers (Op1, Op2, Op3, Op4) configured by the mediation entity (E4) to indicate to the service providers the substitution requests and offers received in the request messages, the remuneration value of the service provider (Op1, Op2, Op3, Op4) receiving the notification message (Notif) indicating a metric associated with resources used or saved for routing data by said service provider during the temporal cycle, and the binary state value set to a value indicating an end of negotiation in the event that the determined active service provider (Op1) has sent a request message comprising an interaction parameter indicating an offer of substitution for the plurality for the temporal cycle.

2. Substitution method according to Claim 1, wherein the interaction parameter between each of the service providers of the plurality of service providers (Op1, Op2, Op3 and Op4) comprises
- a parameter requesting the substitution of one service provider (Op1) of the plurality of service providers for each of the other service providers (Op2, Op3 and Op4) of the plurality of service providers,
- a parameter offering the substitution of one service provider (Op1) of the plurality of service providers for each of the other service providers (Op2, Op3, Op4) of the plurality of service providers.

3. Substitution method according to Claim 1 or Claim 2, wherein updating the interaction parameter comprises configuring, in the notification message sent to the management entity (G1) of the active service provider (Op1), substitution requests received in the request messages (Req) sent by the non-active service providers (Op2, Op3, Op4) of the plurality of service providers.

4. Substitution method according to any of Claims 1 to 3, wherein the updated interaction parameter of the request message further comprises a datum relating to the technology of a communication network of the service provider (Op1, Op2, Op3, Op4) whose management entity (G1, G2, G3, G4) sends the request message (Req).

5. Substitution method according to any of Claims 1 to 4, wherein the notification message (Notif) further comprises information indicating whether the service provider (Op1, Op2, Op3, Op4) whose management entity (G1, G2, G3, G4) receives the notification message is removed from the plurality of service providers (Op1, Op2, Op3, Op4) when implementing the substitution method.

6. Substitution method according to any of Claims 1 to 5, wherein the notification message (Notif) further comprises a datum related to the consumption of resources saved by substituting the service providers (Op1, Op2, Op3 and Op4) of the plurality of service providers with the active service provider (Op1).

7. Substitution method according to any of Claims 1 to 6, wherein the state value is set to indicate that one of the service providers of the plurality of service providers is in a position to route the data instead of the other service providers of the plurality of service providers if the interaction parameter of the request message (Req) sent by the active service provider (Op1) comprises a substitution offer parameter or if the number of request (Req) and/or notification (Notif) messages reaches a predetermined value.

8. Substitution method according to any of Claims 1 to 7, wherein the remuneration value relates to the savings in resources generated by the recipient service provider (Op1, Op2, Op3, Op4).

9. Substitution method according to any of Claims 1 to 8, wherein a new active service provider (Op2) is also determined as a function of the transmitted remuneration values and/or as a function of a resource consumed by the active service provider (Op1) for routing communication data as a substitute for the service providers (Op1, Op2, Op3, Op4) of the plurality of service providers.

10. Method for determining an active service provider (Op1) from among a plurality of service providers (Op1, Op2, Op3 and Op4), said active service provider (Op1) routing data instead of the plurality of service providers for a determined duration, called temporal cycle, the method being implemented by a management entity (G1, G2, G3, G4) of each service provider of the plurality of service providers (Op1, Op2, Op3, Op4) that is able to communicate with a mediation entity (EM) and comprising:
- receiving (E2) an information message from the mediation entity (EM) comprising an identifier of the active service provider (Op1) and an interaction parameter between each of the service providers (Op1, Op2, Op3, Op4) of the plurality of service providers, the identifier of the active service provider being determined by means of a remuneration value indicating its least contribution to data routing in previous temporal cycles, and as long as a binary state value is set by the mediation entity to indicate negotiation is in progress between the service providers with a view to implementing substitution,
- at least one updating step for updating the interaction parameter indicating the substitution requests and offers of the service providers (Op1, Op2, Op3, Op4),
- at least one sending step (E3, E6) for sending the mediation entity (EM) a substitution request message (Req) comprising an identifier of the service provider (Op1, Op2, Op3, Op4) whose management entity (G1, G2, G3, G4) sends the message and the updated interaction parameter,
- at least one reception step (E5, E8) for receiving from the management entity (EM) a notification message (Notif) comprising an identifier of the determined active service provider (Op1), the interaction parameter between each of the service providers (Op1, Op2, Op3, Op4) configured by the mediation entity (E4) to indicate to the service providers the substitution requests and offers received in the request messages, the remuneration value of the service provider (Op1, Op2, Op3, Op4) receiving the notification message (Notif) indicating a metric associated with resources used or saved for routing data by said data routing service provider during the temporal cycle, and the binary state value set to a value indicating an end of negotiation in the event that the determined active service provider (Op1) has sent a request message comprising an interaction parameter indicating an offer of substitution for the plurality for the temporal cycle.

11. Determination method according to Claim 10, wherein updating the interaction parameter in the request messages comprises updating a parameter requesting the substitution of a non-active service provider (Op2, Op3, Op4) of the plurality of service providers for the active service provider (Op1) as a function of the identifier of the active service provider (Op1) received in the notification message (Notif) or the offer for substitution by the active service provider (Op1) to the non-active service providers (Op2, Op3, Op4) as a function of the request parameters received in the notification messages (Notif).

12. Determination method according to Claim 10 or Claim 11, further comprising the management entity (G1) of the active service provider (Op1) sending a registration entity (EE) a resource consumed for routing the communication data in substitution for the service providers (Op1, Op2, Op3, Op4) of the plurality of service providers.

13. Device (100) for substituting a plurality of service providers (Op1, Op2, Op3, Op4) with one of the service providers (Op1) of the plurality of service providers, called active service provider, which routes data instead of the plurality of service providers for a determined duration, called temporal cycle, the device being implemented in a mediation entity (EM) able to communicate with a management entity (G1, G2, G3, G4) implemented by each service provider (Op1, Op2, Op3, Op4) of the plurality of service providers and comprising
- a transmitter (102),
- able to send each management entity (G1, G2, G3, G4) an information message (Info) comprising an identifier of the active service provider (Op1) and an interaction parameter between each of the service providers (Op1, Op2, Op3, Op4) of the plurality of service providers, the identifier of the active service provider being determined by means of a remuneration value indicating its least contribution to data routing in previous temporal cycles, and
- able to send, as long as a received binary state value is set by the mediation entity to indicate negotiation is in progress between the service providers with a view to implementing substitution, to each management entity (G1, G2, G3, G4) a notification message (Notif) comprising an identifier of the determined active service provider (Op1), the interaction parameter between each of the service providers (Op1, Op2, Op3, Op4) configured by the mediation entity (E4) to indicate to the service providers the substitution requests and offers received in the request messages, the remuneration value of the service provider (Op1, Op2, Op3, Op4) receiving the notification message (Notif) indicating a metric associated with resources used or saved for routing data by said service provider during the temporal cycle, and the binary value set to a value indicating an end of negotiation in the event that the determined active operator (Op1) has sent a request message comprising an interaction parameter indicating an offer of substitution for the plurality for the temporal cycle,
- a receiver (101), able to receive, from each management entity (G1, G2, G3, G4), a substitution request message (Req) comprising an identifier of the service provider (Op1, Op2, Op3, Op4) whose management entity (Op1, Op2, Op3, Op4) sends the message and the updated interaction parameter indicating the substitution requests and offers of the service providers (Op1, Op2, Op3, Op4),
- a computer (103), able to update the state value to indicate the substitution requests and offers received in the request messages.

14. Device (200) for determining an active service provider (Op1) from among a plurality of service providers (Op1, Op2, Op3, Op4), said active service provider (Op1) routing data instead of the plurality of service providers for a determined duration, called temporal cycle, the device being implemented in a management entity (G1, G2, G3, G4) of each service provider (Op1, Op2, Op3, Op4) of the plurality of service providers that is able to communicate with a mediation entity (EM) and comprising:
- a receiver (201),
- able to receive an information message (Info) from the mediation entity (EM) comprising an identifier of the active service provider (Op1) and an interaction parameter between each of the service providers (Op1, Op2, Op3, Op4) of the plurality of service providers, the identifier of the active service provider being determined by means of a remuneration value indicating its least contribution to data routing in previous temporal cycles, and as long as a received binary state value is set by the mediation entity to indicate negotiation is in progress between the service providers with a view to implementing substitution,
- able to receive from the management entity (EM) at least one notification message (Notif) comprising an identifier of the determined active service provider (Op1), the interaction parameter between each of the service providers (Op1, Op2, Op3, Op4) configured by the mediation entity (E4) to indicate the substitution requests and offers received in the request messages, the remuneration value of the service provider (Op1, Op2, Op3, Op4) receiving the notification message (Notif) indicating a metric associated with resources used or saved for routing data by said data routing service provider during the temporal cycle, and the binary state value set to a value indicating an end of negotiation in the event that the determined active operator (Op1) has sent a request message comprising an interaction parameter indicating an offer of substitution for the plurality for the temporal cycle,
- a computer (203), able to update the interaction parameter indicating the substitution requests and offers of the service providers (Op1, Op2, Op3, Op4) received in the information message (Info) or notification message (Notif),
- a transmitter (202), able to send the mediation entity (EM) at least one substitution request message (Req) comprising an identifier of the service provider (Op1, Op2, Op3, Op4) whose management entity (G1, G2, G3, G4) sends the request message (Req) and the updated interaction parameter.

15. System for substituting a plurality of service providers with one service provider, called active service provider, of the plurality of service providers for the purpose of routing communication data, said system comprising:
- a mediation entity (EM) comprising a substitution device (100) according to Claim 13,
- at least two service providers (Op1, Op2, Op3, Op4) each comprising a management entity (G1, G2, G3, G4) comprising a determination device (200) according to Claim 14.

16. Computer program comprising instructions for implementing the substitution method according to any one of Claims 1 to 9, when the program is executed by a processor.
